(19) **Europäisches Patentamt European Patent Office Office européen des brevets**

(11) **EP 4 383 183 B1**

(12) **EUROPEAN PATENT SPECIFICATION**

(45) Date of publication and mention
of the grant of the patent:
**26.11.2025 Bulletin 2025/48**

(21) Application number: **22862702.2**

(22) Date of filing: **10.05.2022**

(51) International Patent Classification (IPC):
**G06T 1/00** (2006.01)

(52) Cooperative Patent Classification (CPC):
**G06V 10/82; G06N 3/0464; G06N 3/084;
G06N 3/09; G06V 10/25; G06V 10/764;
G06V 10/774; G06V 10/803; G06V 20/625;**
G06N 3/048

(86) International application number:
**PCT/CN2022/091839**

(87) International publication number:
**WO 2023/029559 (09.03.2023 Gazette 2023/10)**

(54) **DATA PROCESSING METHOD AND APPARATUS**

DATENVERARBEITUNGSVERFAHREN UND -VORRICHTUNG

PROCÉDÉ ET APPAREIL DE TRAITEMENT DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2021 CN 202111001658
01.12.2021 CN 202111458295**

(43) Date of publication of application:
**12.06.2024 Bulletin 2024/24**

(73) Proprietor: **Huawei Technologies Co., Ltd.
Shenzhen, Guangdong 518129 (CN)**

(72) Inventors:
• **WU, Huazhen
Shenzhen, Guangdong 518129 (CN)**
• **JI, Jun
Shenzhen, Guangdong 518129 (CN)**
• **ZHAN, Pengchao
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
WO-A1-2021/164731      CN-A- 108 460 328
CN-A- 110 807 385       CN-A- 110 807 385
CN-A- 112 183 353       CN-A- 112 766 244
CN-A- 113 255 421       US-A1- 2020 327 680

• **SOO-CHANG PEI ET AL: "Enhancement and
license plate detection in nighttime scenes using
LDR images fusion from a single input image",
2013 IEEE INTERNATIONAL CONFERENCE ON
MULTIMEDIA AND EXPO (ICME), IEEE, 14 July
2014 (2014-07-14), pages 1 - 6, XP032639431,
ISSN: 1945-7871, [retrieved on 20140903], DOI:
10.1109/ICMEW.2014.6890571**
• **MUKHERJEE RAJSHEKHAR ET AL: "A robust
algorithm for morphological, spatial image-
filtering and character feature extraction and
mapping employed for vehicle number plate
recognition", 2017 INTERNATIONAL
CONFERENCE ON WIRELESS
COMMUNICATIONS, SIGNAL PROCESSING AND
NETWORKING (WISPNET), IEEE, 22 March 2017
(2017-03-22), pages 864 - 869, XP033324144, DOI:
10.1109/WISPNET.2017.8299884**

## Description

### TECHNICAL FIELD

This application relates to the field of artificial intelligence, and in particular, to a data processing method and apparatus.

### BACKGROUND

Currently, video imaging is an important means of traffic management, agricultural management and industrial production. With development of imaging technologies, a current imaging device can obtain a good imaging result in an ideal case. However, as an imaging condition deteriorates, the imaging result may have problems such as low resolution, poor contrast, and a loss of image details.

A commonly used image signal processor (ISP) imaging system involves a large quantity of parameters. Optimization needs to be performed based on features of various imaging scenarios, resulting in an extremely heavy optimization workload. If image enhancement needs to be performed subsequently, the image enhancement is performed based on an image output by an ISP. However, an optimization workload of the image output by the ISP is extremely heavy, and an optimization effect is limited by manual optimization experience. As a result, information may be lost. Therefore, how to obtain a more accurate image becomes an urgent problem to be resolved.

In Soo-Chang Pei Et. Al: "Enhancement and license plate detection in nighttime scenes using LDR images fusion from a single input" (2013 IEEE International Conference on multimedia and Expo) a high dynamic range imaging method for vehicle images under a nighttime environment is described. The method consists of three steps based on a single input image: i) the license plate detection, ii) generation of differently exposed images with license stroke thickening, and iii) integrating them into a synthesized HDR image, in which the license plate regions and the backgrounds are better visualized. Therefore, the proposed method can be applied to mobile imaging devices to provide the HDR function. Experimental results show that the proposed approach effectively enhances contrast, especially for nighttime vehicle scenes, while still preserving image details, color, and information.

In WO 2021/164731 A1, an image enhancement method and an image enhancement apparatus is described. The image enhancement method comprises: acquiring a first high dynamic range (HDR) image corresponding to an image to be processed and a color image feature of the image to be processed, wherein the color image feature is used for indicating different brightness areas or different color change areas in the image to be processed, the image to be processed is an image of a first resolution, the first HDR image is an image of a second resolution, and the first resolution is greater than the second resolution; inputting the first HDR image into a neural network model, so as to perform super-resolution processing; and performing, by means of the neural network model, image enhancement processing on the first HDR image after same is subjected to the super-resolution processing, and the color image feature, so as to obtain a second HDR image corresponding to the image to be processed, wherein the second HDR image refers to an HDR image, the resolution size of which is the first resolution.

### SUMMARY

This application provides a data processing method and apparatus, to perform target enhancement on raw raw data by using a neural network, and obtain an output image with a better enhancement effect while reducing an enhancement workload.

In view of this, according to a first aspect, this application provides a data processing method, including: obtaining first frame data, where the first frame data is one frame in raw data collected by an image sensor; obtaining, from the first frame data, data corresponding to a compact box, to obtain first data, where coverage of the compact box in the first frame data includes a target object detected from the first frame data; obtaining, from the first frame data, data corresponding to a loose box, to obtain second data, where coverage of the loose box in the first frame data includes and is larger than the coverage of the compact box in the first frame data; and using the first data and the second data as inputs of a target network, to obtain an output image, where the target network is used to extract information about a plurality of channels in the input data, and obtain the output image based on the information about the plurality of channels.

In this implementation of this application, information about a region covering the target object is extracted by using the compact box, and is used as an input of a neural network to obtain an enhancement result of a compact region. Information about a loose region is extracted by using the loose box, and is used as an input of the neural network to obtain an enhancement result of the loose region. Subsequently, the enhancement result of the compact region and the enhancement result of the loose region are fused, to obtain an enhancement result of the target object. Therefore, there is no need to use a commonly used ISP optimization parameter, so that a parameter adjustment workload is reduced, and a target enhancement result is efficiently and accurately obtained. In addition, the neural network may be used to replace a commonly used ISP processing manner, and there is no need to update hardware. When costs do not need to be increased, raw (raw) data is better enhanced, and an image with a better enhancement effect is obtained.

In a possible implementation, the target network may include a first network and a second network. The using the first data and the second data as inputs of a target network, to obtain an output image may include: using the first data as an input of the first network, to obtain first enhancement information, where the first network is used to extract information about a luminance channel in the input data; using the second data as an input of the second network, to obtain second enhancement information, where the second network is used to extract the information about the plurality of channels in the input data; and fusing the first enhancement information and the second enhancement information, to obtain the output image.

Therefore, in this implementation of this application, the target network may include two parts for separately processing information corresponding to the compact box and the loose box. In comparison with enhancement performed by the target network based on entire raw, separate processing performed by using different subnets can implement parallel processing, and reduce overheads and improve work efficiency.

In a possible implementation, the method may further include: performing target detection on the first frame data, to obtain position information of the target object in the first frame data; and generating the compact box and the loose box based on the position information of the target object.

Therefore, in this application, the target object in the raw data may be recognized through the target detection, so that a position of the target object can be quickly and accurately found, to accurately determine positions and sizes of the compact box and the loose box.

In a possible implementation, the obtaining first frame data may include: receiving user input data, and extracting the first frame data from the raw data based on the user input data; or performing target detection on each frame in the raw data, and extracting the first frame data from the raw data based on a detection result.

Therefore, in this implementation of this application, a user may select a frame on which target enhancement needs to be performed, so that the target enhancement can be performed based on a requirement of the user, to improve user experience. Alternatively, a frame on which target enhancement needs to be performed may be selected from the raw data through the target detection, so that frames on which the target enhancement needs to be performed can be recognized more accurately, to obtain a more accurate and clear output image.

In a possible implementation, the target network is obtained by training with reference to a recognition network and a training set. The recognition network is used to obtain semantic information in an input image. In a process of training the target network, an output result of the recognition network is used as a constraint to update the target network.

Therefore, in this implementation of this application, when the target network is trained, an output of the recognition network may be used as the constraint, so that accuracy of recognizing an output image of a constrained target network is higher, to improve output accuracy of the target network.

According to a second aspect, this application provides a neural network training method, including: obtaining a training set, where the training set includes raw data collected by an image sensor and a corresponding truth value tag; using the training set as an input of a target network, to obtain an enhancement result, where the target network is used to extract, from input data, information about a luminance channel corresponding to a compact box, and extract, from the input data, information about a plurality of channels corresponding to a loose box; and fusing the information about the luminance channel and the information about the plurality of channels to obtain the enhancement result, where coverage of the loose box in the input data includes and is larger than coverage of the compact box in the input data; using the training set as an input of a recognition network, to obtain a first recognition result, where the recognition network is used to obtain semantic information in an input image; using the enhancement result as the input of the recognition network, to obtain a second recognition result; and updating the target network based on a difference between the enhancement result and the truth value tag and a difference between the first recognition result and the second recognition result, to obtain an updated target network.

In this implementation of this application, an output result of the recognition network may be used as a constraint to update the target network, so that an output of the target network is more accurate. It may be understood that the recognition network may be used to recognize both a truth value image and an output image of the target network, and recognition results are used as constraints to update the target network, to enable the recognition result of the output image of the target network to be closer to the recognition result of the truth value image. The target network is converged from a dimension of accuracy of a target object in the output image, to improve a probability that the output image of the target network is correctly recognized.

In a possible implementation, the target network includes a first network and a second network. The first network is used to extract, from the data in the training set, the information about the luminance channel corresponding to the compact box. The second network is used to extract, from the input data, the information about the plurality of channels corresponding to the loose box.

Therefore, in this implementation of this application, the target network may be divided into a plurality of parts. In this case, in a training and application process, data corresponding to the compact box and the loose box may be separately processed in parallel, to improve output efficiency of the target network.

In a possible implementation, the enhancement result includes first information output by the first network and second information output by the second network. The second recognition result includes a third recognition result corresponding to the first information and a fourth recognition result corresponding to the second information. The updating the target network based on a difference between the enhancement result and the truth value tag and a difference between the first recognition result and the second recognition result, to obtain an updated target network may include: updating the first network based on a difference between the first information and the truth value tag and a difference between the third recognition result and the first recognition result, to obtain an updated first network; and updating the second network based on a difference between the second information and the truth value tag and a difference between the fourth recognition result and the first recognition result, to obtain an updated second network.

Therefore, in this implementation of this application, the first network and the second network may be separately trained, so that a subnet in the target network may be pertinently trained, so that output accuracy of the subnet is improved, to improve overall output accuracy of the target network.

In a possible implementation, the updating the target network based on a difference between the enhancement result and the truth value tag and a difference between the first recognition result and the second recognition result, to obtain an updated target network may include: obtaining a first loss value based on the difference between the enhancement result and the truth value tag; obtaining a second loss value based on the difference between the first recognition result and the second recognition result; fusing the first loss value and the second loss value, to obtain a third loss value; and updating the target network based on the third loss value, to obtain the updated target network.

Therefore, in this implementation of this application, the target network may alternatively be trained as a whole, so that an overall output effect of the target network is better, to obtain a target network whose output is more accurate.

According to a third aspect, this application provides a data processing apparatus, including:

an obtaining module, configured to obtain first frame data, where the first frame data is one frame in raw data collected by an image sensor;

a compact extraction module, configured to obtain, from the first frame data, data corresponding to a compact box, to obtain first data, where coverage of the compact box in the first frame data includes a target object detected from the first frame data;

a loose extraction module, configured to obtain, from the first frame data, data corresponding to a loose box, to obtain second data, where coverage of the loose box in the first frame data includes and is larger than the coverage of the compact box in the first frame data; and

an output module, configured to use the first data and the second data as inputs of a target network, to obtain an output image, where the target network is used to extract information about a plurality of channels in the input data, and obtain the output image based on the information about the plurality of channels.

In a possible implementation, the target network includes a first network and a second network.

The output module is specifically configured to: use the first data as an input of the first network, to obtain first enhancement information, where the first network is used to extract information about a luminance channel in the input data; use the second data as an input of the second network, to obtain second enhancement information, where the second network is used to extract information about the plurality of channels in the input data; and fuse the first enhancement information and the second enhancement information, to obtain the output image.

In a possible implementation, the apparatus further includes a target detection module, configured to perform target detection on the first frame data, to obtain position information of the target object in the first frame data; and generate the compact box and the loose box based on the position information of the target object.

In a possible implementation, the obtaining module is specifically configured to: receive user input data, and extract the first frame data from the raw data based on the user input data; or perform target detection on each frame in the raw data, and extract the first frame data from the raw data based on a detection result.

In a possible implementation, the target network is obtained by training with reference to a recognition network and a training set. The recognition network is used to obtain semantic information in an input image. In a process of training the target network, an output result of the recognition network is used as a constraint to update the target network.

According to a fourth aspect, this application provides a neural network training apparatus, including:

an obtaining module, configured to obtain a training set, where the training set includes raw data collected by an image sensor and a corresponding truth value tag;

an enhancement module, configured to: use the training set as an input of a target network, to obtain an enhancement result, where the target network is used to extract, from input data, information about a luminance channel corresponding to a compact box, and extract, from the input data, information about a plurality of channels corresponding to a loose box; and fuse the information about the luminance channel and the information about the plurality of channels to obtain the enhancement result, where coverage of the loose box in the input data includes and is larger than coverage of the compact box in the input data;

a semantic segmentation module, configured to use the training set as an input of a recognition network, to obtain a first recognition result, where the recognition network is used to obtain semantic information in an input image, where the semantic segmentation module is further configured to use the enhancement result as an input of the recognition network, to obtain a second recognition result; and

an update module, configured to update the target network based on a difference between the enhancement result and the truth value tag and a difference between the first recognition result and the second recognition result, to obtain an updated target network.

In a possible implementation, the enhancement result includes first information output by the first network and second information output by the second network. The second recognition result includes a third recognition result corresponding to the first information and a fourth recognition result corresponding to the second information. The update module is specifically configured to: update the first network based on a difference between the first information and the truth value tag and a difference between the third recognition result and the first recognition result, to obtain an updated first network; and update the second network based on a difference between the second information and the truth value tag and a difference between the fourth recognition result and the first recognition result, to obtain an updated second network.

In a possible implementation, the update module is specifically configured to: obtain a first loss value based on the difference between the enhancement result and the truth value tag; obtain a second loss value based on the difference between the first recognition result and the second recognition result; fuse the first loss value and the second loss value, to obtain a third loss value; and update the target network based on the third loss value, to obtain the updated target network.

According to a fifth aspect, an embodiment of this application provides a data processing apparatus, including a processor and a memory. The processor and the memory are interconnected through a line, and the processor invokes program code in the memory to perform a processing-related function in the data processing method described in the first aspect. Optionally, an electronic device may be a chip.

According to a sixth aspect, an embodiment of this application provides a neural network training apparatus, including a processor and a memory. The processor and the memory are interconnected through a line, and the processor invokes program code in the memory to perform a processing-related function in the neural network training method described the first aspect. Optionally, an electronic device may be a chip.

According to a seventh aspect, an embodiment of this application provides an electronic device. The electronic device may also be referred to as a digital processing chip or a chip. The chip includes a processing unit and a communication interface. The processing unit obtains program instructions through the communication interface. When the program instructions are executed by the processing unit, the processing unit is configured to perform a processing-related function in any one of the optional implementations of the first aspect or the second aspect.

According to an eighth aspect, an embodiment of this application provides a computer-readable storage medium, including instructions. When the instructions are run on a computer, the computer is enabled to perform the method in any one of the optional implementations of the first aspect or the second aspect.

According to a ninth aspect, an embodiment of this application provides a computer program product including instructions. When the computer program product runs on a computer, the computer is enabled to perform the method in any one of the optional implementations of the first aspect or the second aspect.

## BRIEF DESCRIPTION OF DRAWINGS

FIG. 1 is a schematic diagram of an artificial intelligence main framework to which this application is applied;
FIG. 2 is a schematic diagram of a system architecture according to this application;
FIG. 3 is a schematic diagram of a structure of an electronic device according to this application;
FIG. 4 is a schematic flowchart of a data processing method according to this application;
FIG. 5 is a schematic flowchart of another data processing method according to this application;
FIG. 6 is a schematic diagram of an application scenario according to this application;
FIG. 7 is a schematic diagram of another application scenario according to this application;
FIG. 8 is a schematic diagram of a mask according to this application;
FIG. 9 is a schematic flowchart of another data processing method according to this application;
FIG. 10 is a schematic diagram of another application scenario according to this application;
FIG. 11 is a schematic diagram of another application scenario according to this application;
FIG. 12 is a schematic flowchart of a neural network training method according to this application;
FIG. 13 is a schematic diagram of training data according to this application;

FIG. 14 is a schematic flowchart of another neural network training method according to this application;

FIG. 15 is a schematic diagram of another application scenario according to this application;

FIG. 16 is a schematic diagram of another application scenario according to this application;

FIG. 17 is a schematic diagram of another application scenario according to this application;

FIG. 18 is a schematic diagram of a structure of a data processing apparatus according to this application;

FIG. 19 is a schematic diagram of a structure of a neural network training apparatus according to this application;

FIG. 20 is a schematic diagram of a structure of another data processing apparatus according to this application;

FIG. 21 is a schematic diagram of a structure of another neural network training apparatus according to this application; and

FIG. 22 is a schematic diagram of a structure of a chip according to this application.

## DESCRIPTION OF EMBODIMENTS

The following describes the technical solutions in embodiments of this application with reference to the accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

This application provides a data processing method, a neural network training method, and an apparatus, to process, with reference to a neural network, data collected by an image sensor, so that an output image with a better enhancement effect is obtained. For ease of understanding, the following first separately describes a neural network and an electronic device that includes an image sensor and that is provided in this application.

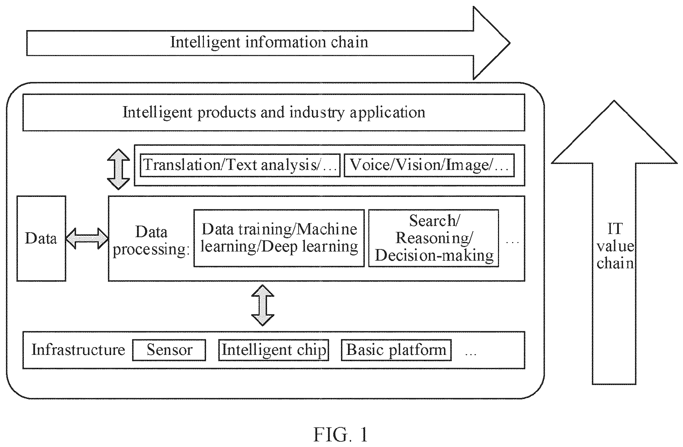

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" indicates a list of processes from data obtaining to data processing. For example, the "intelligent information chain" may be a general process of intelligent information perception, intelligent information representation and formation, intelligent reasoning, intelligent decision-making, and intelligent execution and outputting. In this process, data undergoes a refining process of "data-information-knowledge-intelligence". The "IT value chain" is an industrial ecological process from an underlying infrastructure of artificial intelligence to information (for providing and processing technical implementations) to a system, and indicates value brought by the artificial intelligence to the information technology industry.

(1) Infrastructure

The infrastructure provides computing capability support for the artificial intelligence system, to communicate with the outside world and implement the support through a basic platform. The infrastructure communicates with the outside by using a sensor. The computing capability is provided by an intelligent chip or a hardware acceleration chip, such as a central processing unit (CPU), a network processor (NPU), a graphics processing unit (GPU), an application-specific integrated circuit (ASIC), or a field programmable logic gate array (FPGA). The basic platform includes platform assurance and support that are related to a distributed computing framework and a network, and may include cloud storage and a computing device, an interconnection network, and the like. For example, the sensor communicates with the outside to obtain data. The data is provided for an intelligent chip in a distributed computing system provided by the basic platform for computation.

(2) Data

Data at an upper layer of the infrastructure indicates a data source in the artificial intelligence field. The data relates to graphics, images, speeches, and texts, and further relates to internet of things data of a conventional device, and includes service data of an existing system and perception data such as force, displacement, a liquid level, a temperature, and humidity.

(3) Data processing

The data processing usually includes manners, such as data training, machine learning, deep learning, searching, reasoning, and decision-making.

Through the machine learning and the deep learning, symbolic and formal intelligent information modeling, extraction, preprocessing, training, and the like may be performed on the data.

The reasoning is a process of performing, in a computer or an intelligent system, machine thinking and problem resolving by simulating an intelligent reasoning mode of humans and using formal information according to a reasoning control policy. Typical functions are searching and matching.

The decision-making is a process of performing decision-making after the reasoning on intelligent information, and usually provides functions such as classification, sorting, and prediction.

(4) General capabilities

After the data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent products and industry application

The intelligent products and the industry application refer to products and application of the artificial intelligence system in various fields, and are a package of an overall solution of artificial intelligence. Decision-making for the intelligent information is productized to implement the application. Application fields mainly include: smart terminals, smart transportation, smart healthcare, autonomous driving, a smart city, and the like.

Embodiments of this application relate to related application of a neural network and an image. To better understand solutions in embodiments of this application, the following first describes related terms and concepts of the neural network that may be involved in embodiments of this application.

(1) Neural network

The neural network may include a neural unit. The neural unit may be a computing unit that uses $x_s$ and an intercept of 1 as inputs. An output of the computing unit may be as follows:

$$h_{W,b}(x) = f\left(W^T x\right) = f\left(\sum_{s=1}^{n} W_s x_s + b\right),$$

where s=1, 2, ..., or n, n is a natural number greater than 1, $W_s$ is a weight of $x_s$, and b is a bias of the neural unit. f is an activation function (activation function) of the neural unit. The activation function is used to perform non-linear transformation on a feature obtained in the neural network, to convert an input signal in the neural unit into an output signal. The output signal of the activation function may be used as an input of a next convolutional layer. The activation function may be a sigmoid function. The neural network is a network formed by connecting many single neural units together. To be specific, an output of a neural unit may be an input of another neural unit. An input of each neural unit may be connected to a local receptive field of a previous layer, to extract a feature of the local receptive field. The local receptive field may be a region formed by several neural units.

(2) Deep neural network

The deep neural network (DNN), which is also referred to as a multi-layer neural network, may be understood as a neural network having a plurality of hidden layers. The DNN is divided based on positions of different layers. Neural networks in the DNN may be divided into the following types: input layer, hidden layer, and output layer. Generally, a first layer is the input layer, a last layer is the output layer, and middle layers are all hidden layers. Layers are fully connected. To be specific, any neural unit at an $i^{th}$ layer is necessarily connected to any neural unit at an $(i+1)^{th}$ layer.

Although the DNN seems complex, it is not complex in terms of operation of each layer. In short, the DNN has the following linear relationship expression: $\vec{y} = \alpha(\vec{W}\vec{x} + \vec{b})$, where $\vec{x}$ is an input vector, $\vec{y}$ is an output vector, $\vec{b}$ is an offset vector, $W$ is a weight matrix (which is also referred to as a coefficient), and $\alpha(\ )$ is an activation function. At each layer, the output vector is obtained by performing a simple operation on the input vector $\vec{x}$. Because there are a plurality of layers in the DNN, there are also many coefficients $W$ and offset vectors $\vec{b}$. These parameters defined in the DNN are described as follows: The coefficient $W$ is used as an example. It is assumed that in a three-layer DNN, a linear coefficient from a fourth neural unit at a second layer to a second neural unit at a third layer is defined as $W_{24}^{3}$. The superscript 3 indicates a layer at which the coefficient $W$ is located, and the subscript corresponds to an output third-layer index 2 and an input second-layer index 4.

In conclusion, a coefficient from a $k^{th}$ neural unit at an $(L-1)^{th}$ layer to a $j^{th}$ neural unit at an $L^{th}$ layer is defined as $W_{jk}^{L}$.

It should be noted that the input layer does not have the parameter *W*. In the deep neural network, more hidden layers enable a network to be more capable of describing complex cases in the real world. Theoretically, a model with more parameters has higher complexity and a larger "capacity", which indicates that the model can complete a more complex learning task. A process of training the deep neural network is a process of learning a weight matrix. A final objective of training is to obtain a weight matrix (a weight matrix formed by vectors *W* at a plurality of layers) at all layers of the trained deep neural network.

(3) Convolutional neural network

The convolutional neural network (CNN) is a deep neural network with a convolutional structure. The convolutional neural network includes a feature extractor that includes a convolutional layer and a sub-sampling layer, and the feature extractor may be considered as a filter. The convolutional layer is a neural unit layer that is in the convolutional neural network and at which convolution processing is performed on an input signal. At the convolutional layer of the convolutional neural network, one neural unit may be connected only to some adjacent-layer neural units. One convolutional layer usually includes several feature planes. Each feature plane may include some neural units that are in a rectangular arrangement. Neural units at a same feature plane share a weight, and the shared weight herein is a convolution kernel. The shared weight may be understood as that a manner of extracting a feature is irrelevant to a position. The convolution kernel may be formalized based on a matrix of a random size. In a training process of the convolutional neural network, an appropriate weight may be obtained for the convolution kernel through learning. In addition, benefits directly brought by the shared weight are that connections among layers of the convolutional neural network are reduced, and an overfitting risk is reduced.

(4) Loss function

In a process of training the deep neural network, because it is expected that an output of the deep neural network is as close as possible to a value that actually needs to be predicted, a current predicted value of a network and an actually expected target value may be compared, and then a weight vector of each layer of the neural network is updated based on a difference between the current predicted value and the actually expected target value (where certainly, there is usually an initialization process before a first update, to be specific, parameters are preconfigured for all layers of the deep neural network). For example, if the predicted value of the network is large, the weight vector is adjusted to decrease the predicted value. Adjustment is continuously performed, until the deep neural network can predict the actually expected target value or a value that is extremely close to the actually expected target value. Therefore, "how to obtain, through comparison, the difference between the predicted value and the target value" needs to be predefined. This is a loss function (loss function) or an objective function (objective function). The loss function and the objective function are important equations for measuring the difference between the predicted value and the target value. The loss function is used as an example. A higher output value (loss) of the loss function indicates a larger difference. Therefore, training of the deep neural network is a process of minimizing the loss. The loss function may usually include loss functions such as a mean square error, cross entropy, a logarithm, and an exponent. For example, the mean square error may be used as the loss function, and is defined as $mse = \frac{1}{N}\sum_{n=1}^{N}(y_n - \hat{y}_n)^2$. Specifically, a specific loss function may be selected according to an actual application scenario.

(5) Back propagation algorithm

In a training process, a convolutional neural network model may correct values of parameters in an initial network model by using an error back propagation (BP) algorithm, so that a regeneration error loss of the model becomes increasingly smaller. Specifically, an input signal is transferred forward until an error loss occurs at an output. The parameter in the initial model is updated based on back propagation error loss information, so that the error loss is converged. The back propagation algorithm is a back propagation motion dominated by the error loss, aiming to obtain an optimal model parameter, for example, a weight matrix.

In an implementation of this application, in a training phase, the model may be trained by using the BP algorithm, to obtain the trained model.

(6) Gradient The gradient is a derivative vector of the loss function related to parameters.

(7) Random gradient There are a large quantity of samples in machine learning. Therefore, a loss function calculated each time is calculated based on data obtained through random sampling, and a corresponding gradient is referred to as a random gradient.

(8) YUV YUV is a type of color space, where Y indicates luminance (Luminance or Luma), that is, a grayscale value. "U" and "V" represent chroma (Chrominance or Chroma) for specifying a color of a pixel. "U" and "V" are two components that form a color. Importance of the YUV color space is that a luminance signal Y and chrominance signals U and V of the YUV color space are separated. If there is only a Y signal component but no U and V signal components, an image represented in this way is a black and white grayscale image.

(9) Raw (raw) data The raw data records raw information of a camera sensor in an unprocessed and uncompressed format. RAW may be conceptualized as "raw image encoding data" or is more vividly referred to as a "digital negative".

This application provides a neural network training method and a data processing method. A neural network obtained by using the neural network training method provided in this application may be applied to the data processing method provided in this application. The data processing method provided in this application may be used to process raw raw data collected by a sensor, to obtain an output image.

The following describes a system architecture provided in an embodiment of this application.

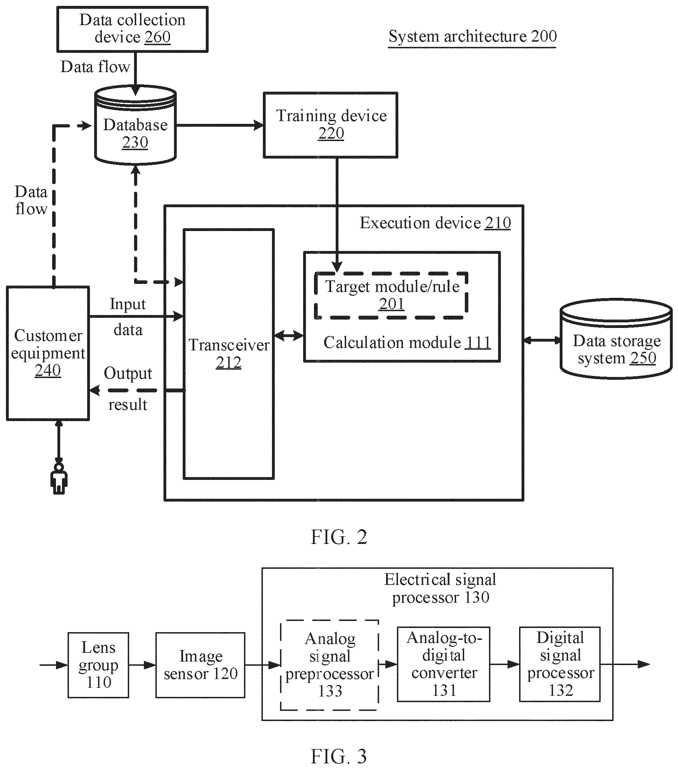

Refer to FIG. 2. An embodiment of this application provides a system architecture 200. As shown in the system architecture 200, a data collection device 260 may be configured to collect training data. After collecting the training data, the data collection device 260 stores the training data in a database 230. A training device 220 obtains a target model/rule 201 through training based on the training data maintained in the database 230.

The following describes a case in which the training device 220 obtains the target model/rule 201 based on the training data. For example, the training device 220 processes a multiframe sample image to output a corresponding prediction tag, and calculates a loss between the prediction tag and an original tag of a sample. In addition, the training device 220 updates a classification network based on the loss until the prediction tag is close to the original tag of the sample or a difference between the prediction tag and the original tag is less than a threshold, so that training of the target model/rule 201 is completed. For details, refer to the following training method.

The target model/rule 201 in this embodiment of this application may be specifically a neural network. It should be noted that, during actual application, the training data maintained in the database 230 is not necessarily all collected by the data collection device 260, and may be received from other devices. In addition, it should be noted that, the training device 220 does not necessarily train the target model/rule 201 completely based on the training data maintained in the database 230, and may obtain training data from a cloud or another place to perform model training. The foregoing descriptions should not be construed as a limitation on embodiments of this application.

The target model/rule 201 obtained through training by the training device 220 may be used in different systems or electronic devices, for example, an execution device 210 shown in FIG. 2. The execution device 210 may be a terminal, for example, a mobile phone terminal, a tablet computer, a laptop computer, an augmented reality (AR)/virtual reality (VR) terminal, a vehicle-mounted terminal, or a television, or may be a plurality of electronic devices such as a server or a cloud. In FIG. 2, the execution device 210 is equipped with a transceiver 212. The transceiver may include an input/output (I/O) interface, another wireless or wired communication interface, or the like, and is configured to exchange data with an external device. The I/O interface is used as an example. A user may input data to the I/O interface by using a customer equipment 240.

In a process in which the execution device 210 preprocesses the input data or a calculation module 212 of the execution device 210 performs related processing such as calculation, the execution device 210 may invoke data, code, and the like in a data storage system 250 for performing corresponding processing, and may store the data, instructions, and the like that are obtained through the corresponding processing into the data storage system 250.

Finally, the transceiver 212 returns a processing result to the customer equipment 240, to provide the processing result for the user.

It should be noted that the training device 220 may generate corresponding target models/rules 201 for different targets or different tasks based on different training data. The corresponding target models/rules 201 may be used for implementing the foregoing targets or completing the foregoing tasks, to provide a required result for the user.

In a case shown in FIG. 2, the user may manually provide the input data, which may be operated by using an interface provided by the transceiver 212. In another case, the customer equipment 240 may automatically send the input data to the transceiver 212. If the customer equipment 240 needs to obtain authorization from the user to automatically send the input data, the user may set corresponding permission on the customer equipment 240. The user may view, on the customer equipment 240, a result output by the execution device 210. Specifically, the result may be displayed or may be presented in a form of a sound, an action, or the like. The customer equipment 240 may alternatively be used as a data collection end to collect input data of an input transceiver 212 and an output result of an output transceiver 212 that are shown in the figure as new sample data, and store new sample data into the database 230. Certainly, the customer equipment 240 may not be used for collection, but the transceiver 212 directly uses the input data of the input transceiver 212 and the output result of the output transceiver 212 that are shown in the figure as the new sample data, and stores the new sample data into the database 230.

It should be noted that, FIG. 2 is merely a schematic diagram of the system architecture according to this embodiment of this application. Position relationships between devices, components, modules, and the like that are shown in the figure do not constitute any limitation. For example, in FIG. 2, the data storage system 250 is an external storage device relative to the execution device 210, and in another case, the data storage system 250 may alternatively be disposed in the execution device 210.

As shown in FIG. 2, the target model/rule 201 is obtained through training by the training device 220. The target model/rule 201 in this embodiment of this application may be a neural network mentioned below in this application.

It may be understood that the training device shown in FIG. 2 may be configured to perform the neural network training method provided in this application, to obtain the trained neural network. The trained neural network may be deployed in the execution device, to perform the data processing method provided in this application. In other words, the execution device may be an electronic device provided in this application.

The electronic device provided in embodiments of this application may specifically include an electronic device such as a handheld device, a vehicle-amounted device, a data processing apparatus, or a computing device that includes an image sensor or that is connected to the image sensor. The electronic device may further include a digital camera (digital camera), a cellular phone (cellular phone), a camera, a smartphone (smartphone), a personal digital assistant (PDA) computer, a tablet computer, a laptop computer (laptop computer), a machine type communication (MTC) terminal, a point of sales (POS), a vehicle-mounted computer, a head-mounted device, a data processing apparatus (such as a wristband or a smartwatch), a security device, a virtual reality (VR) device, an augmented reality (AR) device, and another electronic device having an imaging function.

The digital camera is used as an example. The digital camera is short for a digital still camera, and is a camera that converts an optical image into a digital signal by using a photoelectric sensor. Unlike a conventional camera that relies on changes in photosensitive chemicals on a film to record an image, the sensor of the digital camera is a photosensitive charge-coupled device (CCD) or a complementary metal oxide semiconductor (CMOS). In comparison with the conventional camera, the digital camera has advantages such as being more convenient, fast, repeatable, and more timely because the digital camera directly uses a photoelectric conversion image sensor. With development of CMOS processing technologies, the digital camera has more powerful functions and has almost completely replaced a conventional film camera. The digital camera is widely used in fields such as consumer electronics, human-computer interaction, computer vision, and autonomous driving.

For example, FIG. 3 is a schematic diagram of an electronic device according to this application. As shown in the figure, the electronic device may include a lens (lens) group 110, an image sensor (sensor) 120, and an electrical signal processor 130. The electrical signal processor 130 may include an analog-to-digital (A/D) converter 131 and a digital signal processor 132. The analog-to-digital converter 131 is an analog signal-to-digital signal converter, and is configured to convert an analog electrical signal into a digital electrical signal.

It should be understood that the electronic device shown in FIG. 3 is not limited to including the foregoing components, and may further include more or fewer other components, such as a battery, a flash, a button, and a sensor. In this embodiment of this application, only an electronic device on which the image sensor 120 is installed is used as an example for description, but components installed on the electronic device are not limited thereto.

Optical signals reflected by a photographed object are converged through the lens group 110, and are imaged on the image sensor 120. The image sensor 120 converts an optical signal into an analog electrical signal. The analog electrical signal is converted, in the electrical signal processor 130, into a digital electrical signal by using the analog-to-digital (A/D) converter 131. In addition, the digital electrical signal is processed by using the digital signal processor 132. For example, the data electrical signal is optimized by using a series of complex mathematical algorithm operations, to output an image finally. The electrical signal processor 130 may further include an analog signal preprocessor 133, configured to preprocess the analog electrical signal transmitted by the image sensor and output a preprocessed analog electrical signal to the analog-to-digital converter 131.

Performance of the image sensor 120 affects quality of the finally output image. The image sensor 120 may also be referred to as a photosensitive chip, a photosensitive element, or the like, and includes hundreds of thousands to millions of photoelectric conversion elements. When being irradiated by light, the image sensor 120 generates a charge, and converts the charge into a digital signal by using an analog-to-digital converter chip. Generally, the digital signal output by the image sensor may be referred to as raw (raw) data, to be specific, data on which image processing is not performed.

In some commonly used image enhancement manners, an image signal processor (ISP) imaging system includes a plurality of function modules, and involves a large quantity of parameters. Optimization needs to be performed based on features of each imaging scenario, resulting in an extremely heavy optimization workload. In addition, an optimization effect is limited by experience of optimization personnel. In addition, some commonly used ISPs usually pay attention to video quality optimization. However, during actual imaging application, in many scenarios, attention is paid to imaging quality rather than video quality of a specific target. For example, in a traffic scenario, attention is paid to imaging quality of a license plate region, and in an industrial detection scenario, attention is paid to imaging quality of a specific workpiece. The specific target usually has much prior information.

Specifically, for example, key processing steps in a commonly used ISP processing process may include data correction, detail processing, color adjustment, luminance adjustment, and image enhancement. Each step may include a plurality of classic algorithms. Each algorithm has a corresponding optimization parameter, and a sequence of steps may be adjusted according to an actual case. Therefore, parameter optimization in a conventional ISP processing process is a complex work, and needs to consume large labor costs. In addition, the conventional ISP has poor adaptability to different scenarios. Optimization needs to be performed for the different scenarios, resulting in an extremely heavy optimization workload. The raw data is usually 12-bit (which may alternatively be 14-bit or 16-bit) uncompressed data. After being processed by the ISP, the raw data is converted into 8-bit image data. In a conversion process, specific information is lost. In addition, if quality of input raw raw data is poor, the ISP may introduce pseudo textures to an image due to wrong accumulation of a plurality of processing processes. In addition, pseudo textures introduced by different ISP parameters differ greatly. Most existing enhancement algorithms based on a specific target are implemented on an RGB or YUV image processed by the ISP. Because different pseudo textures have been introduced into the image by conventional ISP processing, an upper effect limit of a target enhancement algorithm on the RGB or YUV image is low, and generalization is weak. In this case, the most existing enhancement algorithms based on the specific target need to be separately adapted to different ISP chip imaging styles. If the target enhancement is implemented only in a raw raw data domain, a final enhancement effect needs to be achieved through cooperation with subsequent ISP optimization. An overall procedure is complex and a complex ISP optimization work cannot be avoided.

In addition, some commonly used image enhancement manners are generally used for enhancing an image processed by the ISP. However, some information may be lost in the ISP processing process, resulting in a poor image enhancement effect, a heavy parameter optimization workload, and low enhancement efficiency.

Therefore, this application provides a data processing method, so that imaging quality of a specific target can be improved while an optimization workload can be reduced and overheads are reduced on the premise that imaging hardware is not upgraded.

In the method provided in this application, the raw data is enhanced by using a neural network. There is no need to use a large quantity of parameters for optimization, and a trained neural network only needs to be deployed in an ISP chip. The following separately describes an application process and a training process of the neural network.

1. Application process

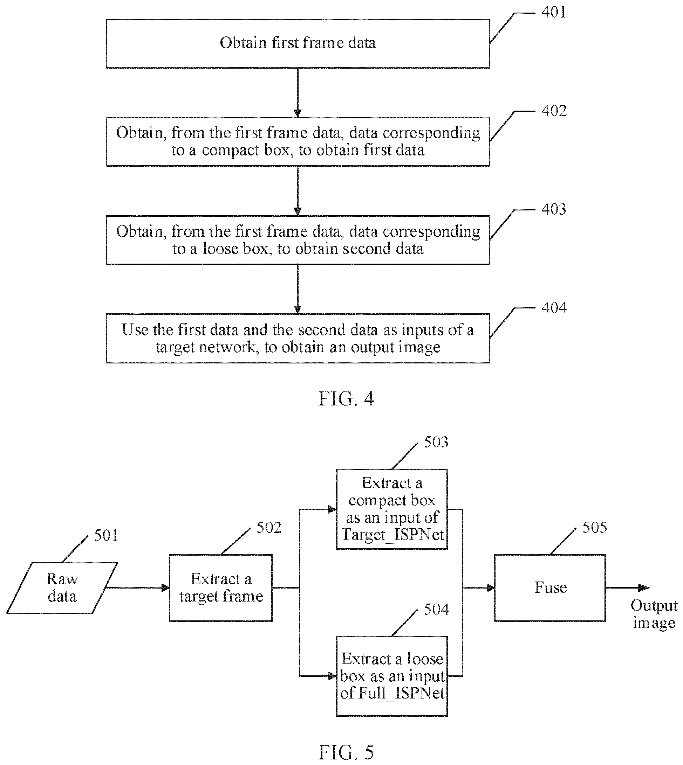

FIG. 4 is a schematic flowchart of a data processing method according to this application. The descriptions are as follows:

401: Obtain first frame data.

Before step 401, raw data collected by an image sensor, that is, the raw data, may be obtained. The first frame data is one frame of data in the raw data, to be specific, data on which image enhancement needs to be performed.

Optionally, user input data may be received, and then the first frame data is determined from the raw data based on the user input data. Alternatively, target detection is performed on each frame in the raw data, and then the first frame data is extracted from the raw data based on a detection result. Alternatively, a frame may be randomly selected from the raw data as the first frame data; and so on. For example, a frame with a clearer target is extracted from the raw data as the first frame data, or a frame with a more complex target texture is extracted from the raw data as the first frame data. Specifically, selection may be performed according to an actual application scenario. Certainly, each frame in the raw data may be enhanced. In this application, for example, the first frame data is used as an example for description.

Generally, the first frame data may include information about a plurality of channels. A specific quantity of channels may be determined based on data collected by the image sensor. For example, the image sensor may collect information about a luminance channel, information about a chroma channel, and the like.

402: Obtain, from the first frame data, data corresponding to a compact box, to obtain first data.

After the first frame data is selected from the raw data, the compact box and a loose box may be generated based on the first frame data. Data corresponding to the compact box is extracted from the first frame data, to obtain the first data. The compact box covers a region in which a target object is located in the first frame data, so that the first data including information about the target object can be extracted from the first frame data.

403: Obtain, from the first frame data, data corresponding to the loose box, to obtain second data.

A size of the loose box is greater than and covers a range that corresponds to the compact box and that in the first frame data. The data corresponding to the loose box is extracted from the first frame data, to obtain the second data.

Specifically, target detection may be performed on the first frame data, to recognize a position of the target object in the first frame data, and then the compact box and the loose box are generated based on the position of the target object. It may be understood that coverage of the compact box in the first frame data includes the information about the target object, and is more closely attached to the target object. In addition to the information about the target object, coverage of the loose box in the first frame data may further include information about a pixel adjacent to the target object.

404: Use the first data and the second data as inputs of a target network, to obtain an output image.

The target network is used to enhance the target object based on the first data and the second data, to obtain an enhanced image, that is, the output image.

Optionally, the target network may include a plurality of parts, for example, may include a first network and a second network. The first network may be used to extract luminance information from the input data and enhance the luminance information. The second network may be used to separately extract the information about the plurality of channels from the input data and enhance the information about the plurality of channels. The first data may be used as an input of the first network, to obtain first enhancement information. The second data may be used as an input of the second network, to obtain second enhancement information. The first enhancement information and the second enhancement information are fused, to obtain the output image. Therefore, texture details of the target object may be enhanced by using the compact box, so that definition of the target object is improved, to enable the target object in the output image to be clearer.

Certainly, in addition to extracting and enhancing the luminance information, the first network may alternatively extract and enhance information about other channels. In this application, for example, an example in which the luminance information is extracted from the input data and is enhanced is used for description, and does not constitute a limitation.

Therefore, in this implementation of this application, information about a luminance channel in the target object may be extracted and enhanced by using the compact box. The information about the target object and information about a plurality of channels near the target object may be extracted and enhanced by using the loose box, so that textures of the target object can be enhanced, and the target object included in the output image is enabled to be clearer, to obtain an output image whose target object is enhanced. For example, in some imaging scenarios, more attention is paid to imaging quality of a specific target. In this application, the image enhancement is performed on the target object, so that an imaging effect of the output image is improved. In addition, for the commonly used ISP, a parameter adjustment workload is heavy, and information may be lost in a processing process. In this application, raw data including full information is processed by using a neural network, to implement end-to-end target enhancement and reduce the parameter adjustment workload.

In addition, when the target network is trained, training may be performed with reference to a recognition network and a training set. The recognition network may be used to obtain semantic information in an input image. For example, information about an object in the input image, for example, information such as a type, a size, or a position of the object, may be recognized by using the recognition network. In a process of training the target network, an output result of the recognition network may be used as a constraint to update the target network, to obtain an updated target network. Therefore, in this implementation of this application, when the target network is trained, the output result of the recognition network may be used as the constraint, to enable a recognition result of an output result of the target network to be more accurate, so that accuracy and definition of the output image of the target network can be improved, to improve an image enhancement effect of the target network.

It may be understood that, in this application, the neural network may be deployed in an ISP system, so that a commonly used ISP processing system may be replaced with the neural network, to improve target enhancement efficiency.

For example, a procedure of another data processing method provided in this application may be shown in FIG. 5.

501: Obtain raw data.

Generally, the raw data may be collected by an image sensor. To implement end-to-end target enhancement based on uncompressed raw data, a specific amount of raw data may be buffered in an ISP system. For example, after the sensor collects the raw data, the raw data may be transmitted to the ISP system for subsequent processing.

502: Extract a target frame.

After the raw data is obtained, target enhancement may be performed on each frame, or target enhancement may be performed on one or more frames selected from the raw data. For example, in this embodiment, an example in which one frame is selected as the target frame (that is, the foregoing first frame data) to perform the target enhancement is used for description.

Specifically, target detection may be performed on the raw data, and one or more frames including a target object are sifted out from the raw data as the target frame. Alternatively, a user may select a frame as the target frame, and extract the target frame from the raw data.

For example, a target detection algorithm may be used to obtain information such as a size and definition of a target object in each frame of a video, and then a frame with a target object of a larger size or higher definition is selected from the video as the target frame. A position of the target object in the target frame can also be obtained.

For another example, in some scenarios, for example, an industrial detection scenario, a user may set a position of the target frame and a position of a target object. For example, the user sets a specific frame number as a snapshot frame, and may determine a specific position of the target object in a picture based on a relative position relationship between a camera and the target object.

In addition, after the target frame is obtained, the target detection may be performed on the target frame to recognize specific information of the target object in the target frame, or information about the target object, for example, a position, a size, or a shape of the target object, is determined by manual setting by the user. Then, a compact box and a loose box may be generated based on the specific information of the target object. The compact box may be understood as a box closely attached to the target object. In addition to coverage of the compact box, the loose box may further include a range within a specific range adjacent to the target object. It may be understood that the compact box compactly wraps the target object, and is more closely attached to a contour of the target object; and the loose box is larger than and covers the compact box, and includes the target object and a specific range around the target object.

503: Extract the compact box as an input of Target_ISPNet.

For ease of understanding, in this embodiment, a first network is referred to as Target_ISPNet. Information about the coverage of the compact box may be extracted from the target frame, and the extracted information is used as an input of Target_ISPNet, to output luminance enhancement information.

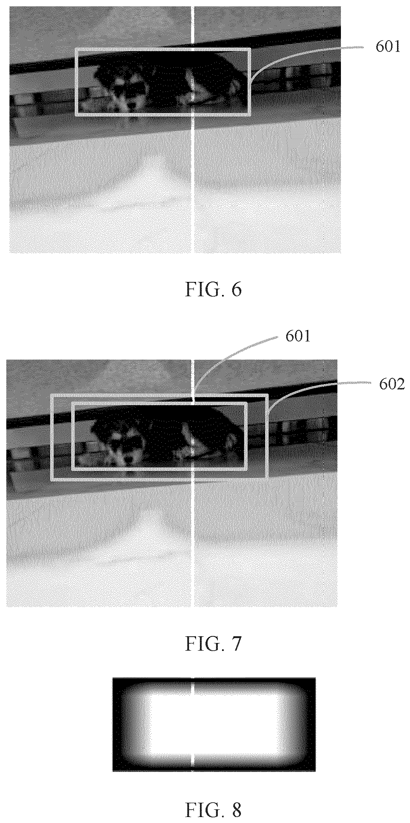

For example, as shown in FIG. 6, information covered by a compact box 601 may be extracted from the target frame, and used as an input of Target_ISPNet, to obtain information about a luminance channel within the coverage of the compact box through detail enhancement and contrast enhancement. For example, Yt represents the information about the luminance channel.

Certainly, Target_ISPNet may also be used to enhance information about another channel such as a chroma channel. In this application, an example in which Target_ISPNet is used to extract and enhance the information about the luminance channel is used for description.

504: Extract the loose box as an input of Full_ISPNet.

For ease of understanding, in this embodiment, a second network is referred to as Full_ISPNet. Information covered by the loose box may be extracted from the target frame, and the extracted information is used as an input of Full_ISPNet, to output enhancement information of a plurality of channels that is obtained by enhancing each channel.

For example, as shown in FIG. 7, information about coverage of a loose box 602 may be extracted from the target frame, and used as an input of Full_ISPNet, to obtain enhancement information Yf of a luminance channel within the coverage of the loose box and enhancement information UfVf of a color channel within the coverage of the loose box.

505: Fuse the enhancement information to obtain an output image.

After the enhancement information of the luminance channel and the enhancement information about the plurality of channels are obtained, the enhancement information of the luminance channel and the enhancement information about the plurality of channels may be fused, to obtain an enhanced output image.

An output Yt of the luminance channel of Target_ISPNet is fused with outputs YfUfVf of Full_ISPNet, to obtain a final target enhancement result. The fusion may be implemented in a plurality of manners, for example, weighted fusion and Poisson fusion.

For example, the weighted fusion is used as an example. Generally, textures that are of the compact box and the loose box and that are in a compact region are consistent. The compact region is the coverage of the compact box, and a mask (mask) may be used to fuse Yt and YfUfVf. Generally, luminance information may be extracted from a region corresponding to the compact box and enhanced. Therefore, in a fusion process, Yf and Yt may be fused in the luminance channel, and UfVf may be used in a UV channel. Certainly, if Target_ISPNet also outputs enhancement information of the UV channel, information that is about the UV channel and that is output by Target_ISPNet and information that is about the UV channel and that is output by Full_ISPNet may alternatively be fused. This may be specifically adjusted according to an actual application scenario.

For example, a fusion manner of each channel may be expressed as follows:

$$Yout = Yt*mask + Yf*(1-mask);$$

Uout = Uf; and
Vout = Vf.

A pixel value in the mask may be used as a fusion weight. As shown in FIG. 8, for example, a central region of the compact box is close to 1, and a region outside the compact box is close to 0. Near-linear transition may be used near the compact box.

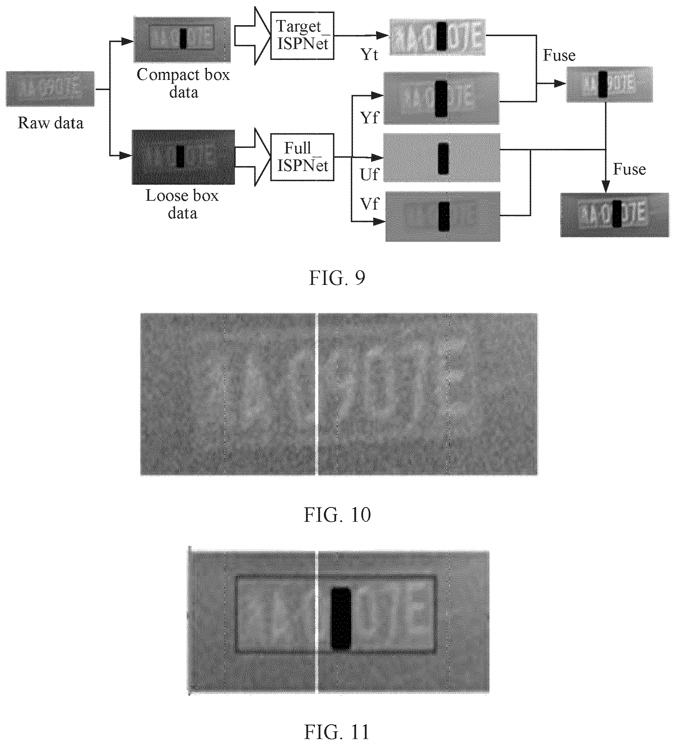

For ease of understanding, license plate image enhancement in a traffic scenario is used as an example for description. For an overall procedure, refer to FIG. 9.

First, a captured license plate image is shown in FIG. 10. A position of a license plate in an image may be recognized by using a target detection network, and then a compact box and a loose box are generated based on the position of the license plate. As shown in FIG. 11, a detection box compactly surrounding the license plate is referred to as the compact box. The loose box may be obtained by extending the compact box to a specific range. An extension proportion may be preset, or may be set by a user. For example, the user may set a size of a license plate part that needs to be enhanced. For example, in a license plate snapshot, a size of the compact box accounts for 30% of a size of the loose box.

Generally, a commonly used ISP system needs to adjust and enhance information such as details, contrast, luminance, and a color. In an ISP processing process, tasks of detail enhancement, contrast enhancement, luminance adjustment, and color adjustment differ greatly. The details and the contrast are high-frequency information, while the luminance and the color are low-frequency information. Therefore, the tasks of detail enhancement and contrast enhancement are difficult and need to consume more network computing instances. In addition, human eyes usually only pay attention to detail enhancement and contrast enhancement in a target compact box. Therefore, a target network provided in this application may include at least two parts: an enhancement network Target_ISPNet for the compact box and an enhancement network Full_ISPNet for the loose box, so that a luminance channel of a detected target is enhanced by using Target_ISPNet, to enhance details and contrast of a compact box region, and luminance adjustment and color adjustment of a loose box region are implemented by using Full_ISPNet. Therefore, definition of a target object is improved from a plurality of dimensions, and viewing experience of the user is improved.

To fully dig out prior information of a target imaging object, after a target frame number and a corresponding target position are obtained from a system, the coverage of the compact box and the coverage of the loose box that are extracted from the target frame are used as inputs of Target_ISPNet and Full_ISPNet respectively. As shown in FIG. 9, Target_ISPNet obtains the enhancement information Yt of the luminance channel of the compact region through the detail enhancement and the contrast enhancement. Full_ISPNet obtains Yf, Uf, and Vf of the loose region through the luminance adjustment and the color adjustment. Yt and Yf are fused to obtain the fused luminance information of the compact region, and then the luminance information of the compact region is pasted back to the loose box region, to obtain information about a plurality of channels in the loose box region.

In this implementation of this application, information about a region covering the target object is extracted by using the compact box, and is used as an input of a neural network to obtain an enhancement result of a compact region. Information about a loose region is extracted by using the loose box, and is used as an input of the neural network to obtain an enhancement result of the loose region. Subsequently, the enhancement result of the compact region and the enhancement result of the loose region are fused to obtain an enhancement result of the target object. Therefore, there is no need to use a commonly used ISP optimization parameter, so that a parameter adjustment workload is reduced, and a target enhancement result is efficiently and accurately obtained. In addition, the neural network may be used to replace a commonly used ISP processing manner, and there is no need to update hardware. When costs do not need to be increased, raw data is better enhanced, and an image with a better enhancement effect is obtained

2. Training process

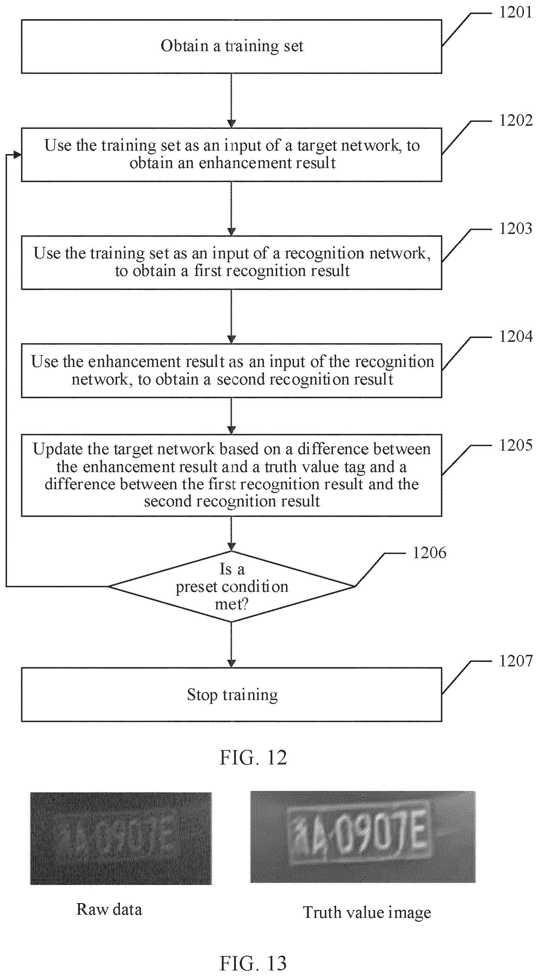

The data processing method provided in this application is described above. Data corresponding to a compact box and a loose box that are extracted from a target frame is used as inputs of a target network, to obtain a target enhancement result. The target network may be a trained neural network. FIG. 12 shows a neural network training method provided in this application. The descriptions are as follows:
1201: Obtain a training set.

The training set may include a plurality of samples and a tag corresponding to each sample. The training set may include raw data collected by an image sensor and a corresponding truth value image.

It may be understood that the training set may include the raw data (that is, a sample) collected by the image sensor and an enhanced image, that is, the truth value image.

Generally, training data is irrelevant to a training manner of a target network. For example, if subnets, that is, Target_ISPNet and Full_ISPNet, of the target network are separately trained, truth value images in the training set may be classified into a plurality of types, for example, a truth value image corresponding to a compact box and a truth value image corresponding to a loose box. If the target network is trained as a whole, the training set may include the raw data and a corresponding enhanced image.

For example, the raw data and the corresponding truth value image may be shown in FIG. 13. The raw data may include a photographed license plate raw data that carries noise, and a corresponding truth value image obtained through ISP processing such as noise reduction, detail enhancement, and contrast enhancement.

1202: Use the training set as an input of the target network, to obtain an enhancement result.

The target network may be used to extract, from input data, information about a luminance channel corresponding to the compact box, and extract, from the input data, information about a plurality of channels corresponding to the loose box, and fuse the information about the luminance channel and the information about the plurality of channels to obtain the enhancement result.

Optionally, the target network includes a first network and a second network. The first network is used to extract, from the data in the training set, the information about the luminance channel corresponding to the compact box. The second network is used to extract, from the input data, the information about the plurality of channels corresponding to the loose box.

Correspondingly, the enhancement result may include first information output by the first network and second information output by the second network.

Specifically, for the target network, refer to the target network mentioned in FIG. 4 to FIG. 11. Details are not described herein again.

It should be noted that, in this implementation of this application, a training process for the target network may be an iterative training process. The target network may be iteratively updated for a plurality of times, in other words, step 1202 to step 1206 may be performed for a plurality of times. In this embodiment, for example, only one iteration process is used as an example for description, and does not constitute a limitation.

1203: Use the training set as an input of a recognition network, to obtain a first recognition result.

The recognition network may be used to recognize information about a target object in an input image, for example, information such as a position, a type, or a size of the target object to obtain the first recognition result. The recognition network may specifically include a target detection network, a semantic segmentation network, a classification network, or the like, and may be used to extract semantic information in the input image, and then execute a task such as detection, segmentation, or classification based on the extracted semantic information, to obtain specific information of an object in the input image.

1204: Use the enhancement result as an input of the recognition network, to obtain a second recognition result.

An output result of the target network is also used as an input of the recognition network, to obtain the second recognition result. The second recognition result may include information about a target object in an enhancement result recognized by the recognition network, for example, information such as a position, a type, or a size of the target object.

**In** addition, the second recognition result may include a third recognition result corresponding to first information and a fourth recognition result corresponding to second information. It may be understood that the output result of the target network may include an output result of the first network and an output result of the second network. Semantic segmentation may be separately performed on the output result of the first network and the output result of the second network by using the recognition network, to obtain information about a target object in the first information and information about a target object in the second information.

1205: Update the target network based on a difference between the enhancement result and a truth value tag and a difference between the first recognition result and the second recognition result, to obtain an updated target network.

A loss value between the enhancement result and the truth value tag and a loss value between the first recognition result and the second recognition result may be calculated. The loss value between the first recognition result and the second recognition result is used as a constraint. The target network is updated by using the loss value between the enhancement result and the truth value tag, to obtain the updated target network.

Specifically, the target network may include the first network and the second network. If an entire target network is updated, an overall loss value of the target network may be calculated. If the first network and the second network are separately updated, a loss value is calculated for each of an output of the first network and an output of the second network, so that the first network and the second network are separately updated.

More specifically, if the first network and the second network are separately updated, and the second recognition result may include the third recognition result and the fourth recognition result, the first network may be updated based on a difference between the first information and the truth value tag and a difference between the third recognition result and the first recognition result, to obtain an updated first network. The second network is updated based on a difference between the second information and the truth value tag and a difference between the fourth recognition result and the first recognition result, to obtain an updated second network, so that the target network is updated.

If the entire target network is updated, a first loss value may be obtained based on the difference between the enhancement result and the truth value tag. A second loss value is obtained based on the difference between the first recognition result and the second recognition result. The first loss value and the second loss value are fused, to obtain a third loss value. The target network is updated based on the third loss value, to obtain the updated target network.

Therefore, in this implementation of this application, a plurality of manners are provided for updating the target network. An output result of the recognition network may be used as a constraint to update the target network, so that an output of the target network is more accurate. It may be understood that the recognition network may be used to recognize both the truth value image and an output image of the target network, and recognition results are used as constraints to update the target network, to enable the recognition result of the output image of the target network to be closer to the recognition result of the truth value image. The target network is converged from a dimension of accuracy of a target object in the output image, to improve a probability that the output image of the target network is correctly recognized. For example, if the target object recognized in the truth value image is a "dog", a process of training the target network is to enable the recognition result of the output image of the target network to be closer to the "dog", so that the output result of the target network is more accurate.

1206: Determine whether a convergence condition is met, and if yes, perform step 1207, or if no, continue to perform step 1202.

After the updated target network is obtained, whether the convergence condition is met may be determined. If the convergence condition is met, the updated target network may be output, in other words, the training on the target network is completed. If the convergence condition is not met, the updated target network may be used as a new target network, and the new target network continues to be trained, in other words, step 1202 is repeatedly performed until the convergence condition is met.

The convergence condition may include one or more of the following: A quantity of times of training the target network reaches a preset quantity of times, or output precision of the target network is higher than a preset precision value, or average precision of the target network is higher than a preset average value, or training duration of the target network exceeds preset duration, or recognition accuracy of the recognition network for the output image of the target network is higher than preset accuracy.

1207: Stop training.

After it is determined that the target network meets the convergence condition, in other words, an expected target network is obtained, the training on the target network may be stopped, and an updated target network obtained through current iteration is output.

Therefore, in this implementation of this application, in the process of training the target network, the recognition network is used, and a loss value between the recognition results of the truth value image and the output image is used as a constraint, to enable the recognition result of the output image of the target network to be closer to the recognition result of the truth value image. This is equivalent to describing a case in which the target object in the output image of the target object is closer to the truth value image, to improve definition and accuracy of the output image of the target network.

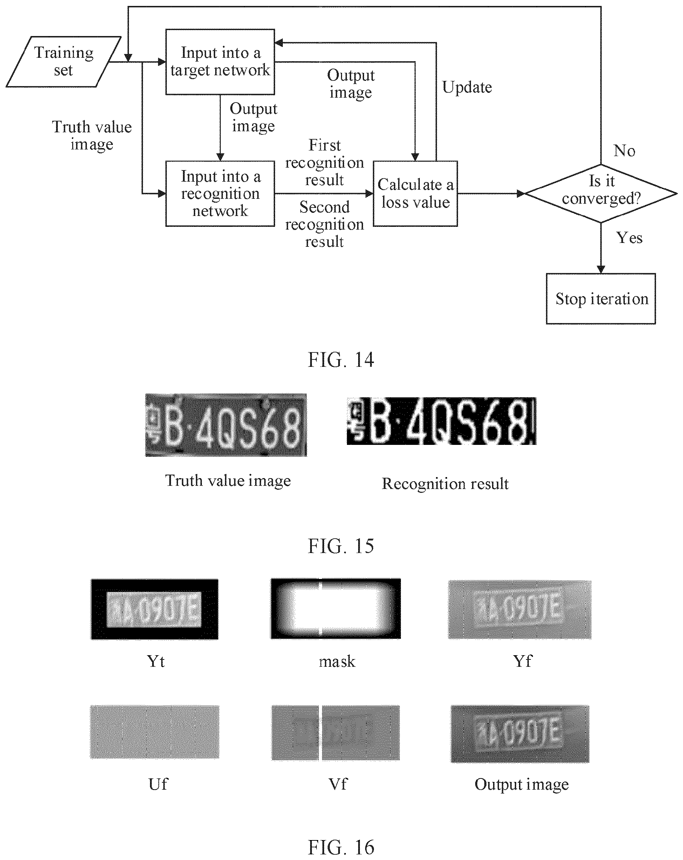

For example, for ease of understanding, a detailed procedure is shown in FIG. 14. A detailed application scenario is used as an example for description.

First, a training set is used as an input of each of the target network and the recognition network.

Raw data in each sample in the training set may be used as an input of the target network, to obtain an output image.

A truth value image (for example, represented as *Gt*) in each sample is used as an input of the recognition network, to obtain a first recognition result.

The output image of the target network is used as an output of the recognition network, to obtain a second recognition result.

Then, loss values are separately calculated based on the output image, the first recognition result, and the second recognition result, and the loss values are used to update the target network.

It is determined, based on the loss values, whether the target network is converged. If yes, iteration may be stopped; and if no, iteration may continue.

In a process of updating the target network, an entire target network may be updated. In a process of calculating the loss values, a loss value between the output image and the truth value image and a loss value between the first recognition result and the second recognition result may be calculated, and then the two loss values are fused to reversely update the target network.

If Target_ISPNet and Full_ISPNet are separately updated, a loss value of each network may be calculated, and then each network is updated.

For example, license plate segmentation is used as an example. For a compact box enhancement task, supervised training is performed by using a high-quality color image *Gt_Y,* and a corresponding loss function (Loss) may be expressed as follows:

$$L_{enhance} = \sum_{p \in P} |Ygt - Yt|,$$

where P indicates pixels at different positions and *Yt* indicates an output of the Target_ISPNet network. The loss function restricts the output image to be similar to an enhanced high-definition image as much as possible, to enhance a compact region.

To further improve an enhancement effect of a license plate compact region, a license plate segmentation subtask is added in a training process. First, a segmentation network is used to obtain a license plate segmentation result *Lable_gt,* which is used as *Gt* of the segmentation subtask. A truth value image and a segmentation result of the compact region may be shown in FIG. 15.

Generally, only a small module needs to be added to the Target_ISPNet network, to obtain a segmentation output *Lable_{out}.* The segmentation output needs to be performed only during training, without increasing overheads on an application side. For example, a loss of the segmentation subtask may be expressed as follows:

$$L_{semantic} = \sum_{p \in P} (Lable_{out} - Lable\_gt)^2.$$

A loss of Target_ISPNet may be finally expressed as follows:

$$\mathrm{L} = L_{inhance} + \gamma L_{semantic}.$$

A weight of an enhancement task and a semantic segmentation task may be adjusted by adjusting a γ parameter.

For another example, for a training process of Full_ISPNet, supervised training may be performed by using a high-quality color image YUVgt, and a corresponding loss function (Loss) may be expressed as follows:

$$L_{full} = \sum_{p \in P} |Y\_gt - Yf| + \sum_{p \in P} |U\_gt - Uf| + \sum_{p \in P} |V\_gt - Vf|,$$

where P indicates pixels at different positions and *Yf Uf Vf* indicate outputs of the Full_ISPNet network. The loss function restricts the output image to be similar to a high-definition image in training data as much as possible, to enhance a license plate loose region.

After enhancement results of a compact box and a loose box are obtained, a final result of license plate enhancement may be obtained through weighted fusion, and a fusion formula may be expressed as follows:

$$Yout = Yt*mask + Yf*(1-mask);$$

Uout = Uf; and
Vout = Vf.

For example, *YfUfVf* and the mask may be shown in FIG. 16.

Therefore, a characteristic of a target image is considered, and a target is further divided into a compact box input and a loose frame box, to reduce network overheads. In this example, if only a single network is used to implement license plate target enhancement, a network overhead requires about 200 ms to achieve a same enhancement effect. However, after the network is divided into subnets, an overhead of Target_ISPNet is 30 ms and an overhead of Full_ISPNet is 10 ms, and network performance is improved by five times.

In this implementation of this application, in the process of updating the target network, a segmentation result of a segmentation task is introduced as a constraint, so that a segmentation result of the output image of the target network can be restricted to be closer to a segmentation result of the truth value image, and the output image of the target network can be more accurate. In addition, overheads of the target network when the target network is applied are not increased, so that the target network can replace a commonly used ISP processing manner. The raw data is efficiently processed to obtain the output image, and the obtained output image is more accurate.

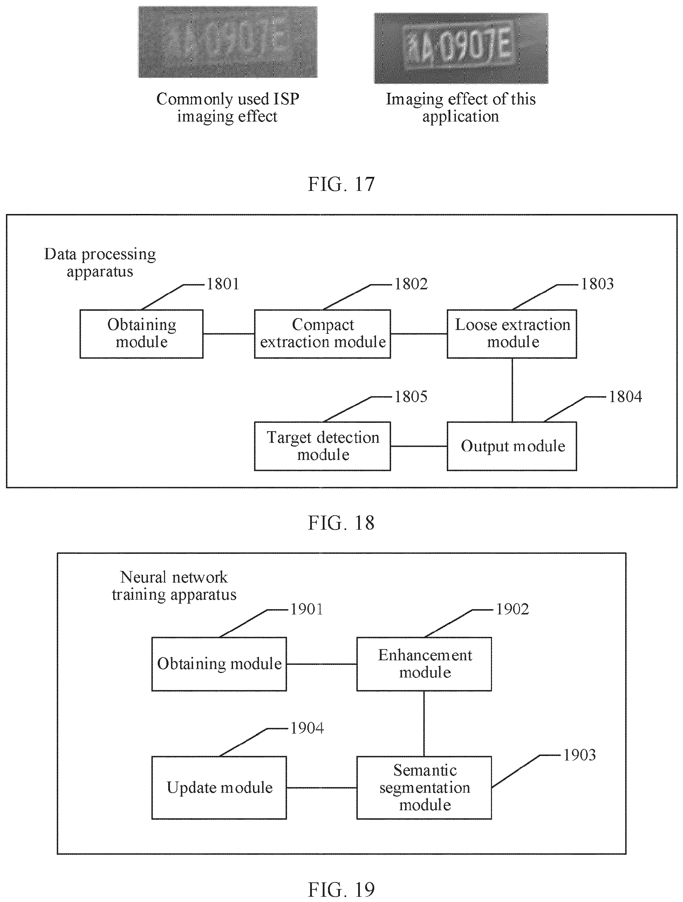

For example, a comparison between an imaging effect of the commonly used ISP processing manner and an imaging effect of the target network may be shown in FIG. 17. Clearly, an imaging effect that is of a license plate and that is output through the target network is better, and an enhancement effect is better.

The foregoing describes the method procedure provided in this application. The following describes an apparatus provided in this application.

FIG. 18 is a schematic diagram of a structure of a data processing apparatus according to this application. The apparatus includes:

> an obtaining module 1801, configured to obtain first frame data, where the first frame data is one frame in raw data collected by an image sensor;
> a compact extraction module 1802, configured to obtain, from the first frame data, data corresponding to a compact box, to obtain first data, where coverage of the compact box in the first frame data includes a target object detected from the first frame data;
> a loose extraction module 1803, configured to obtain, from the first frame data, data corresponding to a loose box, to obtain second data, where coverage of the loose box in the first frame data includes and is larger than the coverage of the compact box in the first frame data; and
> an output module 1804, configured to use the first data and the second data as inputs of a target network, to obtain an output image, where the target network is used to extract information about a plurality of channels in the input data, and obtain the output image based on the information about the plurality of channels.

In a possible implementation, the target network includes a first network and a second network.

The output module 1804 is specifically configured to: use the first data as an input of the first network, to obtain first enhancement information, where the first network is used to extract information about a luminance channel in the input data; use the second data as an input of the second network, to obtain second enhancement information, where the second network is used to extract the information about the plurality of channels in the input data; and fuse the first enhancement information and the second enhancement information, to obtain the output image.

In a possible implementation, the apparatus further includes: a target detection module 1805, configured to: perform target detection on the first frame data, to obtain position information of the target object in the first frame data; and generate the compact box and the loose box based on the position information of the target object.

In a possible implementation, the obtaining module 1801 is specifically configured to: receive user input data, and extract the first frame data from the raw data based on the user input data; or perform target detection on each frame in the raw data, and extract the first frame data from the raw data based on a detection result.

In a possible implementation, the target network is obtained by training with reference to a recognition network and a training set. In a process of training the target network, an output result of the recognition network is used as a constraint to update the target network.

FIG. 19 is a schematic diagram of a structure of a neural network training apparatus according to this application. The apparatus includes:

an obtaining module 1901, configured to obtain a training set, where the training set includes raw data collected by an image sensor and a corresponding truth value tag;

an enhancement module 1902, configured to use the training set as an input of a target network, to obtain an enhancement result, where the target network is used to extract, from input data, information about a luminance channel corresponding to a compact box, and extract, from the input data, information about a plurality of channels corresponding to a loose box; and fuse the information about the luminance channel and the information about the plurality of channels to obtain the enhancement result, where coverage of the loose box in the input data includes and is larger than coverage of the compact box in the input data;

a semantic segmentation module 1903, configured to use the training set as an input of a recognition network, to obtain a first recognition result, where

the semantic segmentation module 1903 is further configured to use the enhancement result as an input of the recognition network, to obtain a second recognition result; and

an update module 1904, configured to update the target network based on a difference between the enhancement result and the truth value tag and a difference between the first recognition result and the second recognition result, to obtain an updated target network.

In a possible implementation, the enhancement result includes first information output by the first network and second information output by the second network. The second recognition result includes a third recognition result corresponding to the first information and a fourth recognition result corresponding to the second information. The update module 1904 is specifically configured to: update the first network based on a difference between the first information and the truth value tag and a difference between the third recognition result and the first recognition result, to obtain an updated first network; and update the second network based on a difference between the second information and the truth value tag and a difference between the fourth recognition result and the first recognition result, to obtain an updated second network.

In a possible implementation, the update module 1904 is specifically configured to: obtain a first loss value based on the difference between the enhancement result and the truth value tag; obtain a second loss value based on the difference between the first recognition result and the second recognition result; fuse the first loss value and the second loss value, to obtain a third loss value; and update the target network based on the third loss value, to obtain the updated target network.

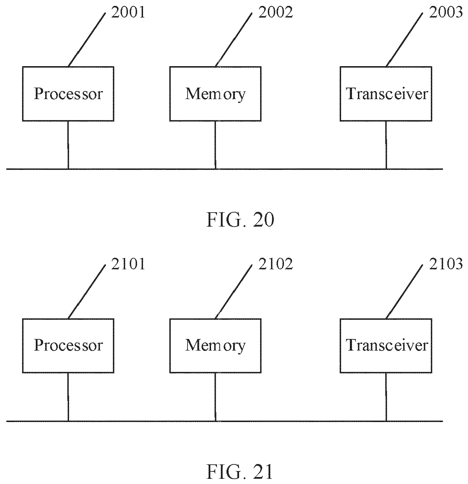

FIG. 20 is a schematic diagram of a structure of another data processing apparatus according to this application. The descriptions are as follows:

The data processing apparatus may include a processor 2001 and a memory 2002. The processor 2001 and the memory 2002 are interconnected through a line. The memory 2002 stores program instructions and data.

The memory 2002 stores program instructions and data that correspond to the steps in FIG. 4 to FIG. 11.

The processor 2001 is configured to perform the step in the method performed by the data processing apparatus shown in any one of the embodiments in FIG. 4 to FIG. 11.

Optionally, the data processing apparatus may further include a transceiver 2003, configured to receive or send data.

An embodiment of this application further provides a computer-readable storage medium. The computer-readable storage medium stores a program for generating a vehicle travel speed. When the program is run on a computer, the computer is enabled to perform the steps in the methods described in the embodiments shown in FIG. 4 to FIG. 11.

Optionally, the data processing apparatus shown in FIG. 20 is a chip, for example, an ISP chip.

An embodiment of this application further provides a data processing apparatus. The data processing apparatus may also be referred to as a digital processing chip or a chip. The chip includes a processing unit and a communication interface. The processing unit obtains program instructions through the communication interface. When the program instructions are executed by the processing unit, the processing unit is configured to perform the step in the method performed by the data processing apparatus shown in any one of the embodiments in FIG. 4 to FIG. 11.

FIG. 21 is a schematic diagram of a structure of another neural network training apparatus according to this application. The descriptions are as follows:

The neural network training apparatus may include a processor 2101 and a memory 2102. The processor 2101 and the memory 2102 are interconnected through a line. The memory 2102 stores program instructions and data.

The memory 2102 stores program instructions and data that correspond to the steps in FIG. 12 to FIG. 17.

The processor 2101 is configured to perform the step in the method performed by the neural network training apparatus shown in any one of the embodiments in FIG. 12 to FIG. 17.

Optionally, the neural network training apparatus may further include a transceiver 2103, configured to receive or send data.

An embodiment of this application further provides a computer-readable storage medium. The computer-readable storage medium stores a program for generating a vehicle travel speed. When the program is run on a computer, the computer is enabled to perform the steps in the methods described in the embodiments shown in FIG. 12 to FIG. 17.

Optionally, the neural network training apparatus shown in FIG. 21 is a chip.

An embodiment of this application further provides a neural network training apparatus. The neural network training apparatus may also be referred to as a digital processing chip or a chip. The chip includes a processing unit and a communication interface. The processing unit obtains program instructions through the communication interface, and when the program instructions are executed by the processing unit, the processing unit is configured to perform the step in the method performed by the neural network training apparatus shown in any one of the embodiments in FIG. 12 to FIG. 17.

An embodiment of this application further provides a digital processing chip. The digital processing chip integrates a circuit and one or more interfaces that are configured to implement the foregoing processors 2001 and 2101 or functions of the processors 2001 and 2101. When the digital processing chip integrates a memory, the digital processing chip may complete the step in the method in any one or more of the foregoing embodiments. When the digital processing chip does not integrate a memory, the digital processing chip may be connected to an external memory through a communication interface. The digital processing chip implements, based on program code stored in the external memory, the actions performed by the data processing apparatus in the foregoing embodiments.

An embodiment of this application further provides a computer program product including instructions. When the computer program product runs on a computer, the computer is enabled to perform the steps in the methods described in the embodiments shown in FIG. 4 to FIG. 17.

The data processing apparatus provided in this embodiment of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in a server to perform the neural network training method described in the embodiments shown in FIG. 4 to FIG. 17. Optionally, the storage unit is a storage unit, for example, a register or a cache in the chip. The storage unit may alternatively be a storage unit, for example, a read-only memory (ROM) or another type of static storage device that can store static information and instructions, or a random access memory (RAM) that is in a wireless access device end and that is outside the chip.

Specifically, the processing unit or a processor may be a central processing unit (CPU), a network processor (NPU), a graphics processing unit (GPU), a digital signal processor (DSP), an application-specific integrated circuit (ASIC), a field programmable gate array (FPGA), another programmable logic device, a discrete gate, a transistor logic device, a discrete hardware component, or the like. A general-purpose processor may be a microprocessor, or may be any regular processor, or the like.

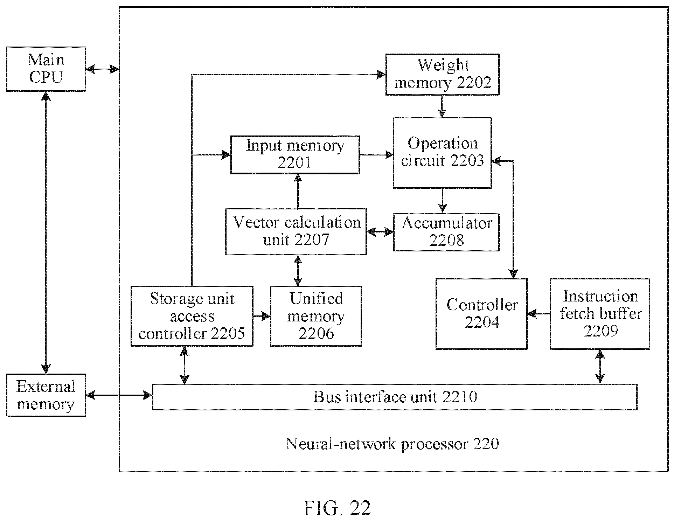

For example, FIG. 22 is a schematic diagram of a structure of a chip according to an embodiment of this application. The chip may be represented as a neural-network processor NPU 220. The NPU 220 is mounted to a host CPU (Host CPU) as a coprocessor, and the host CPU allocates tasks. A core part of the NPU is an operation circuit 2203, and a controller 2204 is used to control the operation circuit 2203 to extract matrix data in a memory for a multiplication operation.

In some implementations, the operation circuit 2203 includes a plurality of processing units (PEs) inside. In some implementations, the operation circuit 2203 is a two-dimensional systolic array. The operation circuit 2203 may alternatively be a one-dimensional systolic array or another electronic circuit that can perform mathematical operations such as multiplication and addition. In some implementations, the operation circuit 2203 is a general-purpose matrix processor.

For example, it is assumed that there is an input matrix A, a weight matrix B, and an output matrix C. The operation circuit fetches data corresponding to the matrix B from a weight memory 2202, and caches the data on each PE in the operation circuit. The operation circuit fetches data of the matrix A from an input memory 2201, to perform a matrix operation on data of the weight matrix B. An obtained partial result or an obtained final result of a matrix is stored in an accumulator (accumulator) 2208.

A unified memory 2206 is configured to store input data and output data. Weight data is directly transferred to the weight memory 2202 by using a storage unit access controller (DMAC) 2205. The input data is also transferred to the unified memory 2206 by using the DMAC.

A bus interface unit (BIU) 2210 is used for interaction between an AXI bus and the DMAC and an instruction fetch buffer (IFB) 2209.

The bus interface unit (BIU) 2210 is used by the instruction fetch buffer 2209 to obtain instructions from an external memory, and is further used by the storage unit access controller 2205 to obtain raw data of the input matrix A or the weight matrix B from the external memory.

The DMAC is mainly configured to transfer input data in an external memory DDR to the unified memory 2206, transfer the weight data to the weight memory 2202, or transfer input data to the input memory 2201.

A vector calculation unit 2207 includes a plurality of operation processing units. If required, further processing, for example, vector multiplication, vector addition, an exponential operation, a logarithmic operation, or a size comparison is performed on an output of the operation circuit. The vector calculation unit 2207 is mainly configured to perform network calculation at a non-convolutional/fully connected layer in a neural network, for example, batch normalization (batch normalization), pixel-level summation, and upsampling on a feature plane.

In some implementations, the vector calculation unit 2207 can store a processed output vector in the unified memory 2206. For example, the vector calculation unit 2207 may apply a linear function and/or a non-linear function to the output of the operation circuit 2203, for example, perform linear interpolation on a feature plane extracted at a convolutional layer, and for another example, apply a vector of an accumulated value to generate an activation value. In some implementations, the vector calculation unit 2207 generates a normalized value, a value of the pixel-level summation, or both. In some implementations, the processed output vector can be used as activation input of the operation circuit 2203, for example, used at a subsequent layer of the neural network.

The instruction fetch buffer (instruction fetch buffer) 2209 connected to the controller 2204 is configured to store instructions used by the controller 2204.

The unified memory 2206, the input memory 2201, the weight memory 2202, and the instruction fetch buffer 2209 are all on-chip memories. The external memory is private to a hardware architecture of the NPU.

An operation at each layer in a recurrent neural network may be performed by the operation circuit 2203 or the vector calculation unit 2207.

The processor mentioned above may be a general-purpose central processing unit, a microprocessor, an ASIC, or one or more integrated circuits for controlling program execution of the methods in FIG. 4 to FIG. 16.

In addition, it should be noted that the apparatus embodiment described above is merely an example. Units described as separate parts may or may not be physically separated. Parts displayed as units may or may not be physical units, to be specific, may be located at one position, or may be distributed on a plurality of network units. Some or all modules may be selected according to an actual requirement to implement the objectives of the solutions in the embodiments. In addition, in the accompanying drawings of the apparatus embodiments provided in this application, connection relationships between modules indicate that the modules have communication connections with each other, which may be specifically implemented as one or more communication buses or signal cables.

Based on the foregoing descriptions of the implementations, a person skilled in the art may clearly understand that this application may be implemented by software in addition to necessary universal hardware, or certainly, may be implemented by dedicated hardware, including a dedicated integrated circuit, a dedicated CPU, a dedicated memory, a dedicated component, and the like. Generally, any function that is performed by a computer program can be easily implemented by using corresponding hardware. In addition, a specific hardware structure used to implement a same function may be in various forms, for example, in a form of an analog circuit, a digital circuit, or a dedicated circuit. However, for this application, software program implementation is a better implementation in most cases. Based on such an understanding, the technical solutions in this application essentially or the part contributing to the conventional technology may be implemented in a form of a software product. The computer software product is stored in a readable storage medium, such as a floppy disk, a USB flash drive, a removable hard disk, a read-only memory (ROM), a random access memory (RAM), a magnetic disk, or an optical disc of a computer, and includes several instructions for enabling a computer device (which may be a personal computer, a server, a network device, or the like) to perform the methods described in embodiments of this application.

Some or all of the foregoing embodiments may be implemented by using software, hardware, firmware, or any combination thereof. When the software is used for implementation, some or all of the foregoing embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

In this specification, the claims, and the accompanying drawings of this application, terms such as "first", "second", "third", and "fourth" (if existent) are intended to distinguish between similar objects, but do not necessarily indicate a specific order or sequence. It should be understood that the data used in such a way are interchangeable in appropriate circumstances, so that the embodiments described herein can be implemented in other orders in addition to the order illustrated or described herein. In addition, terms "include", "have" and any variant thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

**Claims**

1. A data processing method, comprising:

   obtaining first frame data, wherein the first frame data is one frame in raw data (501) collected by an image sensor (120);
   obtaining, from the first frame data, data corresponding to a compact box, to obtain first data, wherein coverage of the compact box in the first frame data comprises a target object detected from the first frame data;
   obtaining, from the first frame data, data corresponding to a loose box, to obtain second data, wherein coverage of the loose box in the first frame data comprises and is larger than the coverage of the compact box in the first frame data; and
   using the first data and the second data as inputs of a target network, to obtain an output image, wherein the target network is used to extract information about a plurality of channels in the input data, and obtain the output image based on the information about the plurality of channels.

2. The method according to claim 1, wherein the target network comprises a first network and a second network; and the using the first data and the second data as inputs of a target network, to obtain an output image comprises:

   using the first data as an input of the first network, to obtain first enhancement information, wherein the first network is used to extract information about a luminance channel in the input data;
   using the second data as an input of the second network, to obtain second enhancement information, wherein the second network is used to extract the information about the plurality of channels in the input data; and
   fusing the first enhancement information and the second enhancement information, to obtain the output image.

3. The method according to claim 1 or 2, wherein the method further comprises:

   performing target detection on the first frame data, to obtain position information of the target object in the first frame data; and
   generating the compact box and the loose box based on the position information of the target object.

4. The method according to any one of claims 1 to 3, wherein the obtaining first frame data comprises:

   receiving user input data, and extracting the first frame data from the raw data (501) based on the user input data; or
   performing target detection on each frame in the raw data (501), and extracting the first frame data from the raw data (501) based on a detection result.

5. The method according to any one of claims 1 to 4, wherein

   the target network is obtained by training with reference to a recognition network and a training set, and the recognition network is used to obtain semantic information in an input image; and
   in a process of training the target network, an output result of the recognition network is used as a constraint to update the target network.

6. A neural network training method, comprising:

   obtaining a training set, wherein the training set comprises raw data (501) collected by an image sensor (120) and a corresponding truth value tag;

using the training set as an input of a target network, to obtain an enhancement result, wherein the target network is used to extract, from input data, information about a luminance channel corresponding to a compact box, and extract, from the input data, information about a plurality of channels corresponding to a loose box; and fusing the information about the luminance channel and the information about the plurality of channels to obtain the enhancement result, wherein coverage of the loose box in the input data comprises and is larger than coverage of the compact box in the input data;

using the training set as an input of a recognition network, to obtain a first recognition result, wherein the recognition network is used to obtain semantic information in an input image;

using the enhancement result as an input of the recognition network, to obtain a second recognition result; and updating the target network based on a difference between the enhancement result and the truth value tag and a difference between the first recognition result and the second recognition result, to obtain an updated target network.

7. The method according to claim 6, wherein the target network comprises a first network and a second network, the first network is used to extract, from the data in the training set, the information about the luminance channel corresponding to the compact box, and the second network is used to extract, from the input data, the information about the plurality of channels corresponding to the loose box.

8. The method according to claim 7, wherein the enhancement result comprises first information output by the first network and second information output by the second network, and the second recognition result comprises a third recognition result corresponding to the first information and a fourth recognition result corresponding to the second information; and

the updating the target network based on a difference between the enhancement result and the truth value tag and a difference between the first recognition result and the second recognition result, to obtain an updated target network comprises:

updating the first network based on a difference between the first information and the truth value tag and a difference between the third recognition result and the first recognition result, to obtain an updated first network; and

updating the second network based on a difference between the second information and the truth value tag and a difference between the fourth recognition result and the first recognition result, to obtain an updated second network.

9. The method according to claim 6 or 7, wherein the updating the target network based on a difference between the enhancement result and the truth value tag and a difference between the first recognition result and the second recognition result, to obtain an updated target network comprises:

obtaining a first loss value based on the difference between the enhancement result and the truth value tag;

obtaining a second loss value based on the difference between the first recognition result and the second recognition result;

fusing the first loss value and the second loss value, to obtain a third loss value; and

updating the target network based on the third loss value, to obtain the updated target network.

10. A data processing apparatus, comprising:

an obtaining module (1801), configured to obtain first frame data, wherein the first frame data is one frame in raw data (501) collected by an image sensor (120);

a compact extraction module (1802), configured to obtain, from the first frame data, data corresponding to a compact box, to obtain first data, wherein coverage of the compact box in the first frame data comprises a target object detected from the first frame data;

a loose extraction module (1803), configured to obtain, from the first frame data, data corresponding to a loose box, to obtain second data, wherein coverage of the loose box in the first frame data comprises and is larger than the coverage of the compact box in the first frame data; and

an output module (1804), configured to use the first data and the second data as inputs of a target network, to obtain an output image, wherein the target network is used to extract information about a plurality of channels in the input data, and obtain the output image based on the information about the plurality of channels.

**11.** A neural network training apparatus, comprising:

an obtaining module (1801), configured to obtain a training set, wherein the training set comprises raw data (501) collected by an image sensor (120) and a corresponding truth value tag;

an enhancement module (1902), configured to: use the training set as an input of a target network, to obtain an enhancement result, wherein the target network is used to extract, from input data, information about a luminance channel corresponding to a compact box, and extract, from the input data, information about a plurality of channels corresponding to a loose box; and fuse the information about the luminance channel and the information about the plurality of channels to obtain the enhancement result, wherein coverage of the loose box in the input data comprises and is larger than coverage of the compact box in the input data;

a semantic segmentation module (1903), configured to use the training set as an input of a recognition network, to obtain a first recognition result, wherein the recognition network is used to obtain semantic information in an input image, wherein

the semantic segmentation module (1903) is further configured to use the enhancement result as an input of the recognition network, to obtain a second recognition result; and

an update module (1904), configured to update the target network based on a difference between the enhancement result and the truth value tag and a difference between the first recognition result and the second recognition result, to obtain an updated target network.

**12.** A data processing apparatus, comprising one or more processors (2001), wherein the one or more processors (2001) are coupled to a memory (2002), the memory (2002) stores a program, and when program instructions stored in the memory (2002) are executed by the one or more processors (2001), the steps of the method according to any one of claims 1 to 5 are implemented.

**13.** A neural network training apparatus, comprising one or more processors (2001), wherein the one or more processors (2001) are coupled to a memory (2002), the memory (2002) stores a program, and when program instructions stored in the memory (2002) are executed by the one or more processors (2001), the steps of the method according to any one of claims 6 to 9 are implemented.

**14.** A computer-readable storage medium, comprising a program, wherein when the program is executed by a processing unit, the method according to any one of claims 1 to 9 is performed.

**15.** A computer program product, comprising a computer program/instructions, wherein when the computer program/instructions is/are executed by a processor, the steps of the method according to any one of claims 1 to 9 are implemented.

**Patentansprüche**

**1.** Datenverarbeitungsverfahren, umfassend:

Erlangen erster Rahmendaten, wobei die ersten Rahmendaten ein Rahmen in Rohdaten (501) sind, die durch einen Bildsensor (120) gesammelt wurden;

Erlangen, aus den ersten Rahmendaten, von Daten, die einer kompakten Box entsprechen, um erste Daten zu erlangen, wobei eine Abdeckung der kompakten Box in den ersten Rahmendaten ein Zielobjekt, das aus den ersten Rahmendaten detektiert wurde, umfasst;

Erlangen, aus den ersten Rahmendaten, von Daten, die einer losen Box entsprechen, um zweite Daten zu erlangen, wobei eine Abdeckung der losen Box in den ersten Rahmendaten die Abdeckung der kompakten Box in den ersten Rahmendaten umfasst und größer als diese ist; und

Verwenden der ersten Daten und der zweiten Daten als Eingaben eines Zielnetzwerks, um ein Ausgabebild zu erlangen, wobei das Zielnetzwerk dazu verwendet wird, Informationen über eine Vielzahl von Kanälen in den Eingabedaten zu extrahieren und das Ausgabebild basierend auf den Informationen über die Vielzahl von Kanälen zu erlangen.

**2.** Verfahren nach Anspruch 1, wobei das Zielnetzwerk ein erstes Netzwerk und ein zweites Netzwerk umfasst; und das Verwenden der ersten Daten und der zweiten Daten als Eingaben eines Zielnetzwerks, um ein Ausgabebild zu erlangen, Folgendes umfasst:

Verwenden der ersten Daten als eine Eingabe des ersten Netzwerks, um erste Verbesserungsinformationen zu erlangen, wobei das erste Netzwerk dazu verwendet wird, Informationen über einen Leuchtkanal in den Eingabedaten zu extrahieren;

Verwenden der zweiten Daten als eine Eingabe des zweiten Netzwerks, um zweite Verbesserungsinformationen zu erlangen, wobei das zweite Netzwerk dazu verwendet wird, die Informationen über die Vielzahl von Kanälen in den Eingabedaten zu extrahieren; und

Zusammenführen der ersten Verbesserungsinformationen und der zweiten Verbesserungsinformationen, um das Ausgabebild zu erlangen.

3. Verfahren nach Anspruch 1 oder 2, wobei das Verfahren ferner Folgendes umfasst:

Durchführen einer Zielerkennung an den ersten Rahmendaten, um Positionsinformationen des Zielobjekts in den ersten Rahmendaten zu erlangen; und

Erzeugen der kompakten Box und der losen Box basierend auf den Positionsinformationen des Zielobjekts.

4. Verfahren nach einem der Ansprüche 1 bis 3, wobei das Erlangen der ersten Rahmendaten Folgendes umfasst:

Empfangen von Benutzereingabedaten und Extrahieren der ersten Rahmendaten aus den Rohdaten (501) basierend auf den Benutzereingabedaten; oder

Durchführen einer Zieldetektion an jedem Rahmen in den Rohdaten (501) und Extrahieren der ersten Rahmendaten aus den Rohdaten (501) basierend auf einem Detektionsergebnis.

5. Verfahren nach einem der Ansprüche 1 bis 4, wobei

das Zielnetzwerk durch Trainieren unter Bezugnahme auf ein Erkennungsnetzwerk und einen Trainingssatz erlangt wird und das Erkennungsnetzwerk dazu verwendet wird, semantische Informationen in einem Eingabebild zu erlangen; und

in einem Prozess des Trainierens des Zielnetzwerks ein Ausgabeergebnis des Erkennungsnetzwerks als eine Einschränkung zum Aktualisieren des Zielnetzwerks verwendet wird.

6. Trainingsverfahren für ein neuronales Netzwerk, umfassend:

Erlangen eines Trainingssatzes, wobei der Trainingssatz Rohdaten (501), die durch einen Bildsensor (120) gesammelt wurden, und ein entsprechendes Wahrheitswert-Tag umfasst;

Verwenden des Trainingssatzes als eine Eingabe eines Zielnetzwerks, um ein Verbesserungsergebnis zu erlangen, wobei das Zielnetzwerk dazu verwendet wird, aus Eingabedaten Informationen über einen Leuchtkanal zu extrahieren, die einer kompakten Box entsprechen, und um aus den Eingabedaten Informationen über eine Vielzahl von Kanälen zu extrahieren, die einer losen Box entsprechen; und Zusammenführen der Informationen über den Leuchtkanal und der Informationen über die Vielzahl von Kanälen, um das Verbesserungsergebnis zu erlangen, wobei eine Abdeckung der losen Box in den Eingabedaten eine Abdeckung der kompakten Box in den Eingabedaten umfasst und größer als diese ist;

Verwenden des Trainingssatzes als eine Eingabe eines Erkennungsnetzwerks, um ein erstes Erkennungsergebnis zu erlangen, wobei das Erkennungsnetzwerk dazu verwendet wird, semantische Informationen in einem Eingabebild zu erlangen;

Verwenden des Verbesserungsergebnisses als eine Eingabe des Erkennungsnetzwerks, um ein zweites Erkennungsergebnis zu erlangen; und

Aktualisieren des Zielnetzwerks basierend auf einer Differenz zwischen dem Verbesserungsergebnis und dem Wahrheitswert-Tag und einer Differenz zwischen dem ersten Erkennungsergebnis und dem zweiten Erkennungsergebnis, um ein aktualisiertes Zielnetzwerk zu erlangen.

7. Verfahren nach Anspruch 6, wobei das Zielnetzwerk ein erstes Netzwerk und ein zweites Netzwerk umfasst, wobei das erste Netzwerk dazu verwendet wird, aus den Daten in dem Trainingssatz die Informationen über den Leuchtkanal zu extrahieren, die der kompakten Box entsprechen, und wobei das zweite Netzwerk dazu verwendet wird, aus den Eingabedaten die Informationen über die Vielzahl von Kanälen zu extrahieren, die der losen Box entsprechen.

8. Verfahren nach Anspruch 7, wobei das Verbesserungsergebnis erste Informationen, die durch das erste Netzwerk ausgegeben werden, und zweite Informationen, die durch das zweite Netzwerk ausgegeben werden, umfasst und wobei das zweite Erkennungsergebnis ein drittes Erkennungsergebnis, das den ersten Informationen entspricht, und ein viertes Erkennungsergebnis, das den zweiten Informationen entspricht, umfasst; und

das Aktualisieren des Zielnetzwerks basierend auf einer Differenz zwischen dem Verbesserungsergebnis und dem Wahrheitswert-Tag und einer Differenz zwischen dem ersten Erkennungsergebnis und dem zweiten Erkennungsergebnis, um ein aktualisiertes Zielnetzwerk zu erlangen, Folgendes umfasst:

Aktualisieren des ersten Netzwerks basierend auf einer Differenz zwischen den ersten Informationen und dem Wahrheitswert-Tag und einer Differenz zwischen dem dritten Erkennungsergebnis und dem ersten Erkennungsergebnis, um ein aktualisiertes erstes Netzwerk zu erlangen; und

Aktualisieren des zweiten Netzwerks basierend auf einer Differenz zwischen den zweiten Informationen und dem Wahrheitswert-Tag und einer Differenz zwischen dem vierten Erkennungsergebnis und dem ersten Erkennungsergebnis, um ein aktualisiertes zweites Netzwerk zu erlangen.

9. Verfahren nach Anspruch 6 oder 7, wobei das Aktualisieren des Zielnetzwerks basierend auf einer Differenz zwischen dem Verbesserungsergebnis und dem Wahrheitswert-Tag und einer Differenz zwischen dem ersten Erkennungsergebnis und dem zweiten Erkennungsergebnis, um ein aktualisiertes Zielnetzwerk zu erlangen, Folgendes umfasst:

Erlangen eines ersten Verlustwerts basierend auf der Differenz zwischen dem Verbesserungsergebnis und dem Wahrheitswert-Tag;

Erlangen eines zweiten Verlustwerts basierend auf der Differenz zwischen dem ersten Erkennungsergebnis und dem zweiten Erkennungsergebnis;

Zusammenführen des ersten Verlustwerts und des zweiten Verlustwerts, um einen dritten Verlustwert zu erlangen; und

Aktualisieren des Zielnetzwerks basierend auf dem dritten Verlustwert, um das aktualisierte Zielnetzwerk zu erlangen.

10. Datenverarbeitungsvorrichtung, umfassend:

ein Erlangungsmodul (1801), das dazu konfiguriert ist, erste Rahmendaten zu erlangen, wobei die ersten Rahmendaten ein Rahmen in Rohdaten (501) sind, die durch einen Bildsensor (120) gesammelt wurden;

ein kompaktes Extraktionsmodul (1802), das dazu konfiguriert ist, aus den ersten Rahmendaten Daten zu erlangen, die einer kompakten Box entsprechen, um erste Daten zu erlangen, wobei eine Abdeckung der kompakten Box in den ersten Rahmendaten ein Zielobjekt, das aus den ersten Rahmendaten detektiert wurde, umfasst;

ein loses Extraktionsmodul (1803), das dazu konfiguriert ist, aus den ersten Rahmendaten Daten zu erlangen, die einer losen Box entsprechen, um zweite Daten zu erlangen, wobei eine Abdeckung der losen Box in den ersten Rahmendaten die Abdeckung der kompakten Box in den ersten Rahmendaten umfasst und größer als diese ist; und

ein Ausgabemodul (1804), das dazu konfiguriert ist, die ersten Daten und die zweiten Daten als Eingaben eines Zielnetzwerks zu verwenden, um ein Ausgabebild zu erlangen, wobei das Zielnetzwerk dazu verwendet wird, Informationen über eine Vielzahl von Kanälen in den Eingabedaten zu extrahieren und das Ausgabebild basierend auf den Informationen über die Vielzahl von Kanälen zu erlangen.

11. Trainingsvorrichtung für ein neuronales Netzwerk, umfassend:

ein Erlangungsmodul (1801), das dazu konfiguriert ist, einen Trainingssatz zu erlangen, wobei der Trainingssatz Rohdaten (501), die durch einen Bildsensor (120) gesammelt werden, und ein entsprechendes Wahrheitswert-Tag umfasst;

ein Verbesserungsmodul (1902), das zu Folgendem konfiguriert ist: den Trainingssatz als eine Eingabe eines Zielnetzwerks zu verwenden, um ein Verbesserungsergebnis zu erlangen, wobei das Zielnetzwerk dazu verwendet wird, aus Eingabedaten Informationen über einen Leuchtkanal zu extrahieren, die einer kompakten Box entsprechen, und um aus den Eingabedaten Informationen über eine Vielzahl von Kanälen zu extrahieren, die einer losen Box entsprechen; und die Informationen über den Leuchtkanal und die Informationen über die Vielzahl von Kanälen zusammenzuführen, um das Verbesserungsergebnis zu erlangen, wobei eine Abdeckung der losen Box in den Eingabedaten eine Abdeckung der kompakten Box in den Eingabedaten umfasst und größer als diese ist;

ein semantisches Segmentierungsmodul (1903), das dazu konfiguriert ist, den Trainingssatz als eine Eingabe eines Erkennungsnetzwerks zu verwenden, um ein erstes Erkennungsergebnis zu erlangen, wobei das Erkennungsnetzwerk dazu verwendet wird, semantische Informationen in einem Eingabebild zu erlangen, wobei

das semantische Segmentierungsmodul (1903) ferner dazu konfiguriert ist, das Verbesserungsergebnis als eine Eingabe des Erkennungsnetzwerks zu verwenden, um ein zweites Erkennungsergebnis zu erlangen; und ein Aktualisierungsmodul (1904), das dazu konfiguriert ist, das Zielnetzwerk basierend auf einer Differenz zwischen dem Verbesserungsergebnis und dem Wahrheitswert-Tag und einer Differenz zwischen dem ersten Erkennungsergebnis und dem zweiten Erkennungsergebnis zu aktualisieren, um ein aktualisiertes Zielnetzwerk zu erlangen.

12. Datenverarbeitungsvorrichtung, umfassend einen oder mehrere Prozessoren (2001), wobei der eine oder die mehreren Prozessoren (2001) mit einem Speicher (2002) gekoppelt sind, der Speicher (2002) ein Programm speichert und, wenn Programmanweisungen, die in dem Speicher (2002) gespeichert sind, durch den einen oder die mehreren Prozessoren (2001) ausgeführt werden, die Schritte des Verfahrens nach einem der Ansprüche 1 bis 5 implementiert werden.

13. Trainingsvorrichtung für ein neuronales Netzwerk, umfassend einen oder mehrere Prozessoren (2001), wobei der eine oder die mehreren Prozessoren (2001) mit einem Speicher (2002) gekoppelt sind, der Speicher (2002) ein Programm speichert und, wenn Programmanweisungen, die in dem Speicher (2002) gespeichert sind, durch den einen oder die mehreren Prozessoren (2001) ausgeführt werden, die Schritte des Verfahrens nach einem der Ansprüche 6 bis 9 implementiert werden.

14. Computerlesbares Speichermedium, umfassend ein Programm, wobei, wenn das Programm durch eine Verarbeitungseinheit ausgeführt wird, das Verfahren nach einem der Ansprüche 1 bis 9 durchgeführt wird.

15. Computerprogrammprodukt, umfassend ein Computerprogramm/Anweisungen, wobei, wenn das Computerprogramm/die Anweisungen durch einen Prozessor ausgeführt wird/werden, die Schritte des Verfahrens nach einem der Ansprüche 1 bis 9 implementiert werden.


**Revendications**

1. Procédé de traitement de données, comprenant :

   l'obtention de premières données de trame, dans lequel les premières données de trame sont une trame dans des données brutes (501) collectées par un capteur d'image (120) ;
   l'obtention, à partir des premières données de trame, de données correspondant à une boîte compacte, pour obtenir des premières données, dans lequel la couverture de la boîte compacte dans les premières données de trame comprend un objet cible détecté à partir des premières données de trame ;
   l'obtention, à partir des premières données de trame, de données correspondant à une boîte lâche, pour obtenir des secondes données, dans lequel la couverture de la boîte lâche dans les premières données de trame comprend et est plus grande que la couverture de la boîte compacte dans les premières données de trame ; et
   l'utilisation des premières données et des secondes données comme entrées d'un réseau cible, pour obtenir une image de sortie, dans lequel le réseau cible est utilisé pour extraire des informations sur une pluralité de canaux dans les données d'entrée, et obtenir l'image de sortie sur la base des informations sur la pluralité de canaux.

2. Procédé selon la revendication 1, dans lequel le réseau cible comprend un premier réseau et un second réseau ; et l'utilisation des premières données et des secondes données comme entrées d'un réseau cible, pour obtenir une image de sortie comprend :

   l'utilisation des premières données comme entrée du premier réseau, pour obtenir des premières informations d'amélioration, dans lequel le premier réseau est utilisé pour extraire des informations sur un canal de luminance dans les données d'entrée ;
   l'utilisation des secondes données comme entrée du second réseau, pour obtenir des secondes informations d'amélioration, dans lequel le second réseau est utilisé pour extraire les informations sur la pluralité de canaux dans les données d'entrée ; et
   la fusion des premières informations d'amélioration et des secondes informations d'amélioration, pour obtenir l'image de sortie.

3. Procédé selon la revendication 1 ou 2, dans lequel le procédé comprend également :

la réalisation d'une détection de cible sur les premières données de trame, pour obtenir des informations de position de l'objet cible dans les premières données de trame ; et
la génération de la boîte compacte et de la boîte lâche sur la base des informations de position de l'objet cible.

4. Procédé selon l'une quelconque des revendications 1 à 3, dans lequel l'obtention de premières données de trame comprend :

la réception de données d'entrée utilisateur et l'extraction des premières données de trame à partir des données brutes (501) sur la base des données d'entrée utilisateur ; ou
la réalisation d'une détection de cible sur chaque trame dans les données brutes (501), et l'extraction des premières données de trame à partir des données brutes (501) sur la base d'un résultat de détection.

5. Procédé selon l'une quelconque des revendications 1 à 4, dans lequel

le réseau cible est obtenu par formation en référence à un réseau de reconnaissance et à un ensemble de formation, et le réseau de reconnaissance est utilisé pour obtenir des informations sémantiques dans une image d'entrée ; et
dans un processus de formation du réseau cible, un résultat de sortie du réseau de reconnaissance est utilisé comme contrainte pour mettre à jour le réseau cible.

6. Procédé de formation de réseau neuronal, comprenant :

l'obtention d'un ensemble de formation, dans lequel l'ensemble de formation comprend des données brutes (501) collectées par un capteur d'image (120) et une étiquette de valeur de vérité correspondante ;
l'utilisation de l'ensemble de formation comme entrée d'un réseau cible, pour obtenir un résultat d'amélioration, dans lequel le réseau cible est utilisé pour extraire, à partir de données d'entrée, des informations sur un canal de luminance correspondant à une boîte compacte, et extraire, à partir des données d'entrée, des informations sur une pluralité de canaux correspondant à une boîte lâche ; et la fusion des informations sur le canal de luminance et des informations sur la pluralité de canaux pour obtenir le résultat d'amélioration, dans lequel la couverture de la boîte lâche dans les données d'entrée comprend et est plus grande que la couverture de la boîte compacte dans les données d'entrée ;
l'utilisation de l'ensemble de formation comme entrée d'un réseau de reconnaissance, pour obtenir un premier résultat de reconnaissance, dans lequel le réseau de reconnaissance est utilisé pour obtenir des informations sémantiques dans une image d'entrée ;
l'utilisation du résultat d'amélioration comme entrée du réseau de reconnaissance, pour obtenir un deuxième résultat de reconnaissance ; et
la mise à jour du réseau cible sur la base d'une différence entre le résultat d'amélioration et l'étiquette de valeur de vérité et d'une différence entre le premier résultat de reconnaissance et le deuxième résultat de reconnaissance, pour obtenir un réseau cible mis à jour.

7. Procédé selon la revendication 6, dans lequel le réseau cible comprend un premier réseau et un second réseau, le premier réseau est utilisé pour extraire, à partir des données de l'ensemble de formation, les informations sur le canal de luminance correspondant à la boîte compacte, et le second réseau est utilisé pour extraire, à partir des données d'entrée, les informations sur la pluralité de canaux correspondant à la boîte lâche.

8. Procédé selon la revendication 7, dans lequel le résultat d'amélioration comprend des premières informations émises par le premier réseau et des secondes informations émises par le second réseau, et le deuxième résultat de reconnaissance comprend un troisième résultat de reconnaissance correspondant aux premières informations et un quatrième résultat de reconnaissance correspondant aux secondes informations ; et
la mise à jour du réseau cible sur la base d'une différence entre le résultat d'amélioration et l'étiquette de valeur de vérité et d'une différence entre le premier résultat de reconnaissance et le deuxième résultat de reconnaissance, pour obtenir un réseau cible mis à jour, comprend :

la mise à jour du premier réseau sur la base d'une différence entre les premières informations et l'étiquette de valeur de vérité et d'une différence entre le troisième résultat de reconnaissance et le premier résultat de reconnaissance, pour obtenir un premier réseau mis à jour ; et
la mise à jour du second réseau sur la base d'une différence entre les secondes informations et l'étiquette de valeur de vérité et d'une différence entre le quatrième résultat de reconnaissance et le premier résultat de reconnaissance, pour obtenir un second réseau mis à jour.

9. Procédé selon la revendication 6 ou 7, dans lequel la mise à jour du réseau cible sur la base d'une différence entre le résultat d'amélioration et l'étiquette de valeur de vérité et d'une différence entre le premier résultat de reconnaissance et le deuxième résultat de reconnaissance, pour obtenir un réseau cible mis à jour, comprend :

l'obtention d'une première valeur de perte sur la base de la différence entre le résultat d'amélioration et l'étiquette de valeur de vérité ;
l'obtention d'une deuxième valeur de perte sur la base de la différence entre le premier résultat de reconnaissance et le deuxième résultat de reconnaissance ;
la fusion de la première valeur de perte et de la deuxième valeur de perte, pour obtenir une troisième valeur de perte ; et
la mise à jour du réseau cible sur la base de la troisième valeur de perte, pour obtenir le réseau cible mis à jour.

10. Appareil de traitement de données, comprenant :

un module d'obtention (1801), configuré pour obtenir des premières données de trame, dans lequel les premières données de trame sont une trame dans des données brutes (501) collectées par un capteur d'image (120) ;
un module d'extraction compact (1802), configuré pour obtenir, à partir des premières données de trame, des données correspondant à une boîte compacte, pour obtenir des premières données, dans lequel la couverture de la boîte compacte dans les premières données de trame comprend un objet cible détecté à partir des premières données de trame ;
un module d'extraction lâche (1803), configuré pour obtenir, à partir des premières données de trame, des données correspondant à une boîte lâche, pour obtenir des secondes données, dans lequel la couverture de la boîte lâche dans les premières données de trame comprend et est plus grande que la couverture de la boîte compacte dans les premières données de trame ; et
un module de sortie (1804), configuré pour utiliser les premières données et les secondes données comme entrées d'un réseau cible, pour obtenir une image de sortie, dans lequel le réseau cible est utilisé pour extraire des informations sur une pluralité de canaux dans les données d'entrée, et obtenir l'image de sortie sur la base des informations sur la pluralité de canaux.

11. Appareil de formation de réseau neuronal, comprenant :

un module d'obtention (1801), configuré pour obtenir un ensemble de formation, dans lequel l'ensemble de formation comprend des données brutes (501) collectées par un capteur d'image (120) et une étiquette de valeur de vérité correspondante ;
un module d'amélioration (1902), configuré pour: utiliser l'ensemble de formation comme entrée d'un réseau cible, pour obtenir un résultat d'amélioration, dans lequel le réseau cible est utilisé pour extraire, à partir de données d'entrée, des informations sur un canal de luminance correspondant à une boîte compacte, et extraire, à partir des données d'entrée, des informations sur une pluralité de canaux correspondant à une boîte lâche ; et fusionner les informations sur le canal de luminance et les informations sur la pluralité de canaux pour obtenir le résultat d'amélioration, dans lequel la couverture de la boîte lâche dans les données d'entrée comprend et est plus grande que la couverture de la boîte compacte dans les données d'entrée ;
un module de segmentation sémantique (1903), configuré pour utiliser l'ensemble de formation comme entrée d'un réseau de reconnaissance, pour obtenir un premier résultat de reconnaissance, dans lequel le réseau de reconnaissance est utilisé pour obtenir des informations sémantiques dans une image d'entrée, dans lequel le module de segmentation sémantique (1903) est également configuré pour utiliser le résultat d'amélioration comme entrée du réseau de reconnaissance, pour obtenir un deuxième résultat de reconnaissance ; et
un module de mise à jour (1904), configuré pour mettre à jour le réseau cible sur la base d'une différence entre le résultat d'amélioration et l'étiquette de valeur de vérité et d'une différence entre le premier résultat de reconnaissance et le deuxième résultat de reconnaissance, pour obtenir un réseau cible mis à jour.

12. Appareil de traitement de données, comprenant un ou plusieurs processeurs (2001), dans lequel les un ou plusieurs processeurs (2001) sont couplés à une mémoire (2002), la mémoire (2002) stocke un programme, et lorsque des instructions de programme stockées dans la mémoire (2002) sont exécutées par les un ou plusieurs processeurs (2001), les étapes du procédé selon l'une quelconque des revendications 1 à 5 sont mises en œuvre.

13. Appareil de formation de réseau neuronal, comprenant un ou plusieurs processeurs (2001), dans lequel les un ou plusieurs processeurs (2001) sont couplés à une mémoire (2002), la mémoire (2002) stocke un programme, et lorsque des instructions de programme stockées dans la mémoire (2002) sont exécutées par les un ou plusieurs processeurs (2001), les étapes du procédé selon l'une quelconque des revendications 6 à 9 sont mises en œuvre.

14. Support de stockage lisible par ordinateur, comprenant un programme, dans lequel, lorsque le programme est exécuté par une unité de traitement, le procédé selon l'une quelconque des revendications 1 à 9 est mis en œuvre.

15. Produit de programme informatique, comprenant un programme informatique/des instructions, dans lequel, lorsque le programme informatique/les instructions sont exécutés par un processeur, les étapes du procédé selon l'une quelconque des revendications 1 à 9 sont mises en œuvre.

Intelligent information chain

Intelligent products and industry application

Translation/Text analysis/... | Voice/Vision/Image/...

Data | Data processing: | Data training/Machine learning/Deep learning | Search/ Reasoning/ Decision-making | ...

IT value chain

Infrastructure | Sensor | Intelligent chip | Basic platform | ...

FIG. 1

FIG. 2

FIG. 3

```
┌─────────────────────────────────────────────────┐ ┌─ 401
│                                                 │/
│            Obtain first frame data              │
│                                                 │
└─────────────────────────────────────────────────┘
                        │
                        ▼
┌─────────────────────────────────────────────────┐ ┌─ 402
│ Obtain, from the first frame data, data corresponding │/
│       to a compact box, to obtain first data    │
└─────────────────────────────────────────────────┘
                        │
                        ▼
┌─────────────────────────────────────────────────┐ ┌─ 403
│ Obtain, from the first frame data, data corresponding │/
│       to a loose box, to obtain second data     │
└─────────────────────────────────────────────────┘
                        │
                        ▼
┌─────────────────────────────────────────────────┐ ┌─ 404
│ Use the first data and the second data as inputs of a │/
│       target network, to obtain an output image │
└─────────────────────────────────────────────────┘
```

FIG. 4

```
                                    ┌──────────────┐ ─ 503
                                    │  Extract a   │/
                                    │ compact box  │
                                    │ as an input of│
                                    │Target_ISPNet │
         ┌─ 501          ┌─ 502     └──────────────┘           ┌─ 505
        /               /                                     /
   ┌─────────┐     ┌──────────┐                          ┌──────────┐
   │  Raw    │────▶│ Extract a │────┐              ┌─────▶│   Fuse   │────▶ Output
   │  data   │     │target frame│    │              │      └──────────┘      image
   └─────────┘     └──────────┘     │   ┌──────────┐ ─ 504
                                    │   │ Extract a loose│/
                                    └──▶│box as an input │
                                        │of Full_ISPNet  │
                                        └──────────┘
```

FIG. 5

FIG. 6

FIG. 7

FIG. 8

FIG. 9

FIG. 10

FIG. 11

```
┌──────────────────────────────────────────────┐ ╭─ 1201
│              Obtain a training set              │
└──────────────────────────────────────────────┘
                       │
                       ▼
┌──────────────────────────────────────────────┐ ╭─ 1202
│  Use the training set as an input of a target   │
│  network, to obtain an enhancement result       │
└──────────────────────────────────────────────┘
                       │
                       ▼
┌──────────────────────────────────────────────┐ ╭─ 1203
│ Use the training set as an input of a recognition│
│  network, to obtain a first recognition result   │
└──────────────────────────────────────────────┘
                       │
                       ▼
┌──────────────────────────────────────────────┐ ╭─ 1204
│ Use the enhancement result as an input of the    │
│ recognition network, to obtain a second          │
│ recognition result                               │
└──────────────────────────────────────────────┘
                       │
                       ▼
┌──────────────────────────────────────────────┐ ╭─ 1205
│ Update the target network based on a difference  │
│ between the enhancement result and a truth value │
│ tag and a difference between the first           │
│ recognition result and the second recognition    │
│ result                                           │
└──────────────────────────────────────────────┘
                       │
                       ▼
                  ◇ Is a           ╭─ 1206
                  preset condition
                  met?
                       │
                       ▼
┌──────────────────────────────────────────────┐ ╭─ 1207
│                 Stop training                   │
└──────────────────────────────────────────────┘
```

FIG. 12

Raw data          Truth value image

FIG. 13

FIG. 14

Truth value image          Recognition result

FIG. 15

Yt                    mask                    Yf

Uf                    Vf                    Output image

FIG. 16

Commonly used ISP
imaging effect

Imaging effect of this
application

FIG. 17

Data processing
apparatus

Obtaining
module — 1801

Compact
extraction module — 1802

Loose extraction
module — 1803

Target detection
module — 1805

Output module — 1804

FIG. 18

Neural network
training apparatus

Obtaining module — 1901

Enhancement
module — 1902

Update module — 1904

Semantic
segmentation
module — 1903

FIG. 19

2001

2002

2003

| Processor | Memory | Transceiver |

FIG. 20

2101

2102

2103

| Processor | Memory | Transceiver |

FIG. 21

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021164731 A1

**Non-patent literature cited in the description**

- **SOO-CHANG PEI**. Enhancement and license plate detection in nighttime scenes using LDR images fusion from a single input. *IEEE International Conference on multimedia and Expo*, 2013